(19) Europäisches Patentamt
European Patent Office
Office européen des brevets

(11) **EP 3 433 573 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(21) Anmeldenummer: **17711683.7**

(22) Anmeldetag: **22.03.2017**

(51) Int Cl.:
**G01B 11/25** (2006.01)

(86) Internationale Anmeldenummer:
**PCT/EP2017/056884**

(87) Internationale Veröffentlichungsnummer:
**WO 2017/162777 (28.09.2017 Gazette 2017/39)**

(54) **VORRICHTUNG ZUR 3-DIMENSIONALEN VERMESSUNG EINES OBJEKTS, VERFAHREN UND COMPUTERPROGRAMM**

DEVICE FOR THREE-DIMENSIONALLY MEASURING AN OBJECT, METHOD AND COMPUTER PROGRAM

DISPOSITIF POUR MESURER UN OBJET EN 3 DIMENSIONS, PROCÉDÉ ET PROGRAMME INFORMATIQUE ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2016   EP 16161794**

(43) Veröffentlichungstag der Anmeldung:
**30.01.2019   Patentblatt 2019/05**

(73) Patentinhaber: **Fraunhofer-Gesellschaft zur Förderung der angewandten Forschung e.V.**
**80686 München (DE)**

(72) Erfinder:
• **DÖGE, Jens**
  **01069 Dresden (DE)**
• **HOPPE, Christoph**
  **01127 Dresden (DE)**
• **NEUDECK, Willi**
  **01189 Dresden (DE)**

(74) Vertreter: **Zinkler, Franz et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
EP-A2- 0 228 500          US-A1- 2005 068 523
US-A1- 2008 204 763       US-A1- 2009 040 532
US-A1- 2014 029 018       US-A1- 2014 285 658

**Beschreibung**

Technisches Gebiet

Ausführungsbeispiele gemäß der vorliegenden Erfindung beziehen sich auf eine Vorrichtung zur 3-dimensionalen Vermessung eines Objekts.

Weitere Ausführungsbeispiele gemäß der vorliegenden Erfindung beziehen sich auf ein Verfahren zur 3-dimensionalen Vermessung eines Objekts.

Weitere Ausführungsbeispiele gemäß der Erfindung beziehen sich auf ein Computerprogramm zur Durchführung eines Verfahrens zur 3-dimensionalen Vermessung eines Objekts.

Weitere Ausführungsbeispiele beziehen sich auf ein Verfahren und eine Vorrichtung zur automatischen Lagebestimmung bei einer 3-dimensionalen (3D)-Vermessung mittels Laserlichtschnitt-Triangulation.

Hintergrund der Erfindung

Aktuell gibt es in vielen technischen Gebieten den Wunsch, ein 3-dimensionales Abbild eines real existierenden Objekts zu erhalten. Beispielsweise ist es manchmal erwünscht, ein digitales Modell eines Objekts zu erstellen, um eine Animation zu erzeugen. Alternativ dazu ist es manchmal auch wünschenswert, ein Objekt zu kopieren, beispielsweise unter Verwendung eines 3-dimensionalen Drucks.

Es hat sich gezeigt, dass ein 3-dimensionales Abbild eines Objekts beispielsweise durch eine Laserlichtschnitt-Abtastung (auch als Laserlichtschnitt-Scan bezeichnet) erhalten werden kann.

So existiert beispielsweise ein Aufbau eines 3-dimensionalen Messsystems mit Laser-lichtschnitt-Triangulation. Bei herkömmlichen Konzepten erfolgt ein Vortrieb wahlweise für das Messobjekt oder für den Sensorkopf. Der Sensorkopf besteht beispielsweise aus einem oder mehreren Laserliniengeneratoren, und einer oder mehreren Messkameras, die beispielsweise in einem definierten geometrischen Verhältnis zueinander angeordnet sind. Bevorzugt sind auch der Sensorkopf aus Laserliniengenerator(en) und Messkamera(s) in einem definierten geometrischen Verhältnis zu einem Messobjekt (das sich beispielsweise während einer Messung in einer vorher definierten Weise verändert) angeordnet. Beispielsweise erfolgt ein kontinuierlicher oder ausgelöster (getriggerter) Betrieb einer Profilmessung durch einen Sensorkopf aus Laserliniengenerator und Messkamera.

Im herkömmlichen System gibt es auch eine feste Zuordnung zwischen Messobjekt und Laserlinie. Dieser ergibt sich beispielsweise durch einen geometrischen Aufbau bzw. durch einen Zusammenhang zwischen Vortriebseinheit des Scanners, Laserliniengenerator(en) und Messkamera(s). Typischerweise gibt es auch eine (beispielsweise vorbestimmte) Bewegungsrichtung.

Im herkömmlichen System gibt es verschiedene Möglichkeiten der Auslösung bzw. "Triggerung". Beispielsweise kann ein Inkrementalgeber für eine Triggerung der Messkamera(s) verwendet werden. Somit erfolgt beispielsweise eine Aufnahme von Messwerten, wenn eine externe Triggerung vorliegt. Die Triggerung kann beispielsweise durch einen gesteuerten oder detektierten Vortrieb an einem Bewegungssystem des Messaufbaus erfolgen.

Typischerweise gibt es eine (beispielsweise vorher festgelegte) Bewegungsrichtung.

Alternativ (oder zusätzlich) zu einer Triggerung durch einen Inkrementalgeber kann beispielsweise eine konstante Scangeschwindigkeit verwendet werden. In diesem Fall kann beispielsweise eine zeitgesteuerte Triggerung zum Einsatz kommen. Alternativ kann in diesem Fall auch ein freilaufender Scanner verwendet werden.

US 2005/0068523 A1 beschreibt einen Kalibrationsblock und ein Verfahren für einen 3D-Scanner. Die genannte Schrift beschreibt einen Kalibrationsblock zur Verwendung bei der Kalibrierung eines 3D-Scanners, ein Scannersystem mit dem Kalibrationsblock und die Verwendung des Kalibrationsblocks für die Kalibration eines Scanners, der zwei Kameras und einen Zeilengenerator umfasst, die in einer festen Beziehung zueinander stehen.

Die US 2009/0040532 A1 beschreibt einen dreidimensionalen Form-Mess-Apparat mit einer Zeilen-Laserlichtquelle und einer Bildaufnahmevorrichtung. Die dreidimensionale Form-Mess-Methode und der Apparat strahlen einen Zeilen-Laserstrahl von einer Laserprjektionseinrichtung auf ein zu vermessendes Objekt und bilden Punkte, die durch den Laserstrahl beleuchtet werden, durch die Bildaufnahmevorrichtung ab. Punkte auf aufgenommenen Bildern werden als Schnittpunkte detektiert. Ferner werden Gleichungen, die die Positionen der Laserebenen umfassen, abgeleitet, und die dreidimensionalen Positionen der Schnittpunkte stellen Unbekannte dar. Die dreidimensionalen Positionen der Schnittpunkte und die Positionen der Laserebenen werden durch Lösung der aufgestellten Gleichungen bestimmt. Die dreidimensionalen Positionen der durch den Laser angestrahlten Punkte werden durch Triangulation berechnet und die dreidimensionale Gestalt des Objekts wird durch eine Wiederholung der genannten Abläufe ermittelt.

Die US 2014/0029018 A1 beschreibt ein Verfahren zur Messung eines extrudierten Profils unter Verwendung eines Messapparats, wobei der Messapparat zumindest zwei Laserlichtabschnitte auf einer Oberfläche des Profils erzeugt und vermisst. Hierzu wird zumindest ein Laserlichtschnittsensor verwendet, wobei die zumindest zwei Laserlichtschnitte im Wesentlichen in einer Ebene liegen. Ferner werden zwei Referenzen und/ oder Referenzmarker in einem jeweiligen gemeinsamen Mess-Aufnahmegebiet positioniert, wobei diese Referenzen oder Referenzmarkierungen für eine Kalibrierung jeweiliger Rohbilder des zumindest einen Laserlichtschnittsensors verwendet werden. Die kalibrierten Rohbilddaten werden dann in ein gemeinsames Koordinatensystem abgebildet.

Die US 2008/0204763 A1 beschreibt einen Messapparatus und ein Verfahren zur Bereichsinspektion. Ein Abbildungsapparat und ein Verfahren zur Messung von dreidimensionalen Charakteristika eines Objekts verwenden eine Bereichsdaten-Akquisition und eine Analyse. Der Abbildungsapparat umfasst eine Vorrichtung zum Konfigurieren der Bereichsdaten-Akquisition und Analyse vor einem Start der Messung. Der Apparat umfasst ferner eine Vorrichtung zum Erzeugen eines Bildes des Objekts durch Detektion von reflektiertem Licht von dem Objekt unter Verwendung zumindest eines Sensors der Pixel aufweist. Der Apparat umfasst ferner eine Vorrichtung zum Erhalten von Bereichsdaten des Objekts, die in Sensor-Pixel-Einheiten gemessen sind. Der Apparat umfasst ferner eine Vorrichtung zur Kalibrierung der erhaltenen Bereichsdaten von Sensor-Pixel-Werten zu Welt-Koordinaten. Der Apparat umfasst ferner eine Vorrichtung zur Korrektur der kalibrierten Bereichs-Daten durch Neu-Abtastung der Bereichsdaten auf ein gleichmäßiges Gitter. Der Apparat umfasst ferner eine Vorrichtung zur Analyse der kalibrierten und korrigierten Bereichsdaten, um die dreidimensionalen Charakteristika des Objekts zu erhalten.

Die US 2014/0285658 A1 beschreibt eine kontaktlose Messvorrichtung. Die Messvorrichtung umfasst ein oder mehrere Bildgebungsvorrichtungen, die Bilddaten einer Oberfläche eines Objekts aufnehmen. Die Vorrichtung umfasst einen oder mehrere Projektions-Mustergeneratoren, die divergente Muster auf einer Oberfläche des Objekts innerhalb eines Sichtfelds der Bildgebungsvorrichtung erzeugen. Unter Verwendung von Bilddaten, die durch die Bildgebungsvorrichtung (m) aufgenommen werden, bestimmt ein Computersystem einen Satz von Attributen der Oberfläche des Objekts und/oder bestimmt automatisch, ob das Messobjekt innerhalb einer Messregion ist.

Die EP 0 228 500 A2 beschreibt ein Verfahren und eine Einrichtung zur berührungslosen Vermessung des Radprofils der Räder von Eisenbahnradsätzen. Die genannte Schrift beschreibt ein Verfahren und eine Einrichtung zur berührungslosen Vermessung des Radprofils der Räder von Eisenbahnradsätzen, wobei das Profil mindestens teilweise beleuchtet wird. Es wird vorgeschlagen, dass jedes Rad entlang einer Messstrecke bewegt und mindestens in einer definierten Messposition mindestens angenähert radial von mindestens einer Beleuchtungseinrichtung, die einen Lichtschild oder eine Lichtkante auf der Umgebungsfläche des Rades erzeugt, während der Bewegung entlang der Messstrecke beleuchtet wird, wobei sich das durch die Beleuchtung ergebende Profilbild von mindestens einer Kamera erfasst und einer Auswerteeinrichtung zu Auswertung zugeleitet wird. Zur Durchführung wird vorgeschlagen, dass in einer Messstrecke für jedes Rad eines Radsatzes eine Hilfsschiene, angeschlossen oder anschließbar an einen Gleis vorgesehen ist, dass die Beleuchtungseinrichtung optische Mittel zur Erzeugung eines Lichtschnitts oder einer Lichtkante an der Umfangsfläche des Rads aufweist und innerhalb einer Bewegungsebene der zugeordneten Hilfsschiene angeordnet ist, dass der Beleuchtungseinrichtung mindestens eine Kamera zur Erfassung des Profils des Lichtschnitts oder der Lichtkante zugeordnet ist, wobei die Kamera mit einer Auswerteeinrichtung und diese mit einer Ausgabeeinheit verbunden ist, und wobei die Einrichtung Mittel zur Erfassung mindestens der Messposition aufweist, die die Aktivierung der Einrichtung auslösen. Herkömmlicherweise besteht das Ziel der aufgenommenen Profile-Speicherung darin, dass alle aufgenommenen Profile einer Verarbeitung zugeführt werden.

In Anbetracht dessen besteht ein Wunsch, ein flexibleres Konzept zur 3-dimensionalen Vermessung eines Objekts zu schaffen.

Zusammenfassung der Erfindung

Ein Ausführungsbeispiel gemäß der vorliegenden Erfindung schafft eine Vorrichtung zur 3-dimensionalen Vermessung eines Objekts gemäß des unabhängigen Anspruchs 1. Die Vorrichtung umfasst einen Positionsbestimmer, der ausgelegt ist, um eine Bildinformation, die den Schnittpunkt einer Linie mit einer Mehrzahl von Linien vorbestimmter oder bekannter Lage zeigt, zu empfangen und um basierend auf der empfangenen Bildinformation eine Lage der projizierten Linie zu bestimmen.

Diese Vorrichtung basiert auf der Erkenntnis, dass es möglich und vorteilhaft ist, eine Lage einer beispielsweise projizierten Linie (beispielsweise relativ zu einem Träger, der ein zu vermessendes Objekt trägt, oder auch relativ zu dem Objekt selbst, falls beispielsweise das Objekt eine Mehrzahl von Linien vorbestimmter oder bekannter Lage aufweist) basierend auf einer Bildinformation, die Schnittpunkte der projizierten Linie mit einer Mehrzahl von Linien vorbestimmter oder bekannter Lage zeigt, zu bestimmen. Insbesondere wurde erkannt, dass es mit geringem oder zumindest vertretbarem Rechenaufwand möglich ist, die Lage der projizierten Linie zu bestimmen, wenn die Schnittpunkte der projizierten Linie mit einer Mehrzahl von Linien vorbestimmter oder bekannter Lage innerhalb eines Bildes bzw. innerhalb einer Bildinformation auswertbar sind. So wurde erkannt, dass die Position von Schnittpunkten einer projizierten Linie (innerhalb eines Bildes) mit einer Mehrzahl von Linien vorbestimmter oder bekannter Lage einen Rückschluss auf die Lage der projizierten Linie (beispielsweise relativ zu der Mehrzahl von Linien vorbestimmter oder bekannter Lage, oder relativ zu einem Koordinatenursprung eines Koordinatensystems, in dem die Lage der Linien bekannt ist) erlaubt. Somit ist es möglich, durch Auswertung der Bildinformation, die Schnittpunkte der projizierten Linie mit der Mehrzahl von Linien vorbestimmter oder bekannter Lage zeigt, zu ermitteln, wo sich die projizierten Linie befindet, ohne dass eine relative Lage beispielsweise eines Laserliniengenerators relativ zu einer Fläche (z.B. Trägerplatte), die die Linien vorbestimmter oder bekannter Lage ausweist, zu kennen. Somit kann beispielsweise der Laserliniengenerator (oder beispielsweise ein Sensorkopf, der den Laserliniengenerator und eine Messkamera umfasst) vergleichsweise frei bewegt werden, wobei dennoch die Lage der projizierten Linie bestimmbar bleibt. Somit wird es beispielsweise entbehrlich, dass der Sensorkopf (oder der Laserliniengenerator) in einer festen oder bekannten Lagerelation zu einer Ebene (z.B. Trägerplatte) geführt wird. Auch kann beispielsweise durch die Ableitung die Information über die Lage der projizierten Linie aus der Bildinformation ein sonstiger (z.B. ein maschinenbaulicher) Aufwand für die Bestimmung einer Lagerelation zwischen dem Laserliniengenerator und einem Objektträger oder einem Objekt oder für die Erzwingung einer vorgegebenen Lagerelation zwischen dem Laserliniengenerator und einem Objektträger oder einem Objekt deutlich verringert werden oder sogar entfallen. Beispielsweise kann es entbehrlich sein, eine Relativbewegung zwischen dem Laserliniengenerator und einem Objektträger oder einem Objekt mit mechanischen Sensoren, (wie z.B. Inkrementalgebern) zu erfassen, oder eine präzise definierte Relativbewegung (z.B. durch Motoren und präzise Führung) zu erzwingen.

Im Übrigen kann man sagen, dass durch die Ableitung der Information über die Lage der projizierten Linie basierend auf der Bildinformation (z.B. aufgrund einer Kenntnis der Schnittpunkte der projizierten Linie mit einer Mehrzahl von Linien vorbestimmter oder bekannter Lage) der mechanische Aufwand verringert wird. Die Bestimmung der Lage der projizierten Linie kann somit durch eine Auswertung einer Bildinformation erfolgen, was in vielen Fällen schneller und mit geringerem Kostenaufwand erzielbar ist als eine mechanische Lagebestimmung.

Zweckmäßig ist es hierbei, die Lage der Linien vorbestimmter oder bekannter Lage derart zu wählen, dass die Information über der Lage der projizierten Linie eindeutig bestimmbar ist. Dies ist beispielsweise der Fall, wenn die Anzahl der Schnittpunkte so groß ist, dass ein eindeutig lösbares (unter Umständen auch überbestimmtes) Gleichungssystem entsteht, so dass ein Rückschluss von der Position der Schnittpunkte der projizierten Linie mit der Mehrzahl von Linien vorbestimmter oder bekannter Lage auf die Lage der projizierten Linie möglich ist. Es hat sich allerdings gezeigt, dass je nach Fall zwei, drei oder vier Linien ausreichend sind, die vorzugsweise nicht alle parallel zueinander sind.

Weiterhin sei darauf hingewiesen, dass die Linie nicht notwendigerweise eine projizierte Linie sein muss. Vielmehr kann die Linie auch eine "gedachte" Linie sein, z.B. wenn man sich ein Graubild mit einer Kamera anschaut und dabei eine bestimmte Zeile im Bild ausliest.

In anderen Worten, es können beispielsweise auch die Schnittpunkte zwischen einer Bildzeile (beispielsweise eines mit einer Messkamera aufgenommenen Bildes) und den Linien vorbestimmter oder bekannter Lage zur Bestimmung einer Lage der Bildzeile verwendet werden. An die Stelle einer Bildzeile kann natürlich auch eine Bildspalte treten. Auch eine schräg durch ein Bild verlaufende Linie kann ausgewertet werden.

In anderen Worten, wenn hierin von einer projizierten Linie die Rede ist, so kann an deren Stelle ganz allgemein eine Linie, deren Lage zu bestimmen ist, treten. Die folgenden Ausführungen nehmen allerdings aus Gründen der Anschaulichkeit zumeist auf eine projizierte Line Bezug.

Erfindungsgemäß ist der Positionsbestimmer ausgelegt, um einen Koordinatenursprung eines Koordinatensystems, das der projizierten Linie zugeordnet ist, und einen Einheitsabschnitt (beispielsweise einen Einheitsvektor s) des Koordinatensystems, das der projizierten Linie zugeordnet ist, zu definieren, und um eine Mehrzahl von Parametern (zum Beispiel Parameter $k_i$) zu bestimmen, die Schnittpunkte zwischen der projizierten Linie und den Linien der Mehrzahl von Linien vorbestimmter oder bekannter Lage beschreiben. Es hat sich gezeigt, dass diese Schnittpunkte zwischen der projizierten Linie und den Linien der Mehrzahl von Linien vorbestimmter oder bekannter Lage durch derartige Parameter in effizienter Weise beschrieben werden können. So ist davon auszugehen, dass die Schnittpunkte zwischen der projizierten Linie und den Linien der Mehrzahl von Linien vorbestimmter oder bekannter Lage in der Bildinformation alle (zumindest näherungsweise) entlang einer geraden Linie liegen, wenn davon ausgegangen wird, dass die beispielsweise durch den Laserliniengenerator projizierte Linie mit guter Genauigkeit innerhalb einer Ebene liegt, und dass die Linien der Mehrzahl von Linien vorbestimmter oder bekannter Lage (zumindest näherungsweise) in einer Ebene liegen, und dass die Bildinformation ein im Wesentliches unverzerrtes (oder durch eine Verzerrungskorrektur korrigiertes) Bild der Ebene, in der die Linien der Mehrzahl von Linien vorbestimmter oder bekannter Lage liegen, darstellt. Wird also davon ausgegangen, dass die genannten Schnittpunkte in der Bildinformation im Wesentlichen (also beispielsweise abgesehen von unvermeidbaren Toleranzen) entlang einer geraden Linie liegen, so kann beispielsweise die Richtung dieser Linie durch einen Einheitsabschnitt (beispielsweise einen Einheitsvektor s) beschrieben werden. Beispielsweise kann der Einheitsabschnitt einer Richtung einer Regressionsgerade durch die Schnittpunkte in der Bildinformation entsprechen. Da beispielsweise der Koordinatenursprung des Koordinatensystems, das der projizierten Linie zugeordnet ist, an einem bestimmten (beispielsweise beliebigen) Punkt entlang der Regressionsgerade durch die Schnittpunkte in der Bildinformation liegt, können die Positionen der Bildpunkte durch die Abstände von diesem Koordinatenursprung beschrieben werden, wobei die Abstände von dem Koordinatenursprung dann Parameter darstellen, die Schnittpunkte zwischen der projizierten Linie und den Linien der Mehrzahl von Linien vorbestimmter oder bekannter Lage beschreiben.

Somit ist insgesamt festzuhalten, dass die genannten Schnittpunkte, die in der Bildinformation ersichtlich sind (bzw. in der Bildinformation durch den Positionsbestimmer erkannt werden können), durch einen Einheitsabschnitt (der beispielsweise eine Richtung einer Regressionsgerade durch die Schnittpunkte in der Bildinformation angibt) und durch eine Mehrzahl von Parametern, die beispielsweise Abstände der Schnittpunkte von einem Koordinatenursprung entlang der Regressions-Gerade angeben, in effizienter Weise beschrieben werden.

Erfindungsgemäß ist der Positionsbestimmer ausgelegt, um die Parameter (die beispielsweise einen Abstand zwischen den Koordinatenursprung und den Schnittpunkten beschreiben) so zu bestimmen, dass die Parameter (beispielsweise in Form von positiven oder negativen skalaren Werten) Abstände der Schnittpunkte von dem Koordinatenursprung des Koordinatensystems, das der projizierten Linie (beispielsweise einer durch das Abbild der Schnittpunkte definierten Linie in der Bildinformation) zugeordnet ist, beschreiben. Die Parameter können beispielsweise die Abstände der Schnittpunkte bezogen auf einen Einheitsabschnitt (beispielsweise mit einer einheitlichen Länge von 1) beschreiben. Eine derartige Bestimmung der Parameter liefert eine effiziente Darstellung, wobei die Schnittpunkte basierend auf der Annahme, dass deren Abbilder in der Bildinformation auf einer geraden Linie liegen, mit einer geringen Datenmenge dargestellt werden. Beispielsweise kann ein Betrag eines jeweiligen der genannten Parameter gleich dem Abstand des jeweiligen Schnittpunkts von dem Koordinatenursprung (des Koordinatensystems, das der Linie zugeordnet ist) sein oder gleich einem Vielfachen dieses Abstandes sein, so dass der jeweilige Parameter - allgemein gesprochen - den jeweiligen Abstand beschreibt. Ein Vorzeichen eines jeweiligen der genannten Parameter kann beispielsweise beschreiben, in welcher Richtung der jeweilige Schnittpunkt von dem Koordinatenursprung aus gesehen liegt.

Erfindungsgemäß ist der Positionsbestimmer ausgelegt, um eine Lage des Koordinatenursprungs des Koordinatensystems, das der projizierten Linie zugeordnet ist, in einem Koordinatensystem, das einem Trägerbauteil, das die Linien vorbestimmter oder bekannter Lage trägt (und das beispielsweise auch ein dreidimensional zu vermessendes Objekt tragen kann), zugeordnet ist, zu bestimmen. Indem die Lage des Koordinatenursprungs des Koordinatensystems, das der projizierten Linie zugeordnet ist, bestimmt wird, wird ein wichtiger Parameter erhalten, der einen Rückschluss auf die tatsächliche Lage der projizierten Linie (beispielsweise relativ zu dem Trägerbauteil) ermöglicht. Die Linien vorbestimmter oder bekannter Lage können (alternativ) auch bezüglich des Trägerbauteils ortsfest abgebildet sein.

Bei bevorzugten Ausführungsbeispielen kann der Positionsbestimmer ausgelegt sein, um Konstanten $n_i$ und $r_i$ zu erhalten, die die Linien vorbestimmter oder bekannter Lage in einem Koordinatensystem in der Form der $n_i^T\, p = r_i$ beschreiben. So kann beispielsweise unter der Annahme, dass $n_i$ und $p$ 2-dimensionale Vektoren sind, der Vektor $n_i$ die Richtung einer Linie vorbestimmter oder bekannter Lage beschreiben. Der Vektor $n_i$ kann dabei eine Richtung aufweisen, die beispielsweise orthogonal zu einer Richtung i-ten Linie vorbestimmter oder bekannter Lage ist. Der skalare Parameter $r_i$, oder dessen Betrag, kann beispielsweise einen Abstand beschreiben, den die i-te Linie vorbestimmter oder bekannter Lage zu einem Koordinatenursprung einer Ebene, in der die Linien vorbestimmter oder bekannter Lage liegen, hat. Die Parameter $r_i$ können positiv oder negativ sein, und die Beträge der Parameter $r_i$, können den Abstand der jeweiligen Linie von dem Koordinatenanspruch beschreiben, also gleich dem Abstand der jeweiligen Linie von dem Koordinatenursprung oder gleich einem Vielfachen des Abstandes der jeweiligen Linie von dem Koordinatenursprung sein. Vorzeichen der Parameter $r_i$ können beispielsweise angeben, auf welcher Seite der jeweiligen Linie der Koordinatenursprung liegt Somit ist festzuhalten, dass beispielsweise eine i-te Linie vorbestimmter oder bekannter Lage durch einen 2-dimensionalen Vektor $n_i$ und durch eine skalare Größe $r_i$ beschrieben werden kann. Zu der i-ten Linie vorbestimmter oder bekannter Lage gehören dann alle Punkte, deren Koordinatenvektor $p$ die Gleichung $n_i^T\, p = r_i$ erfüllen.

Der Positionsbestimmer kann die genannten Konstanten $n_i$ und $r_i$ auf verschiedene Weise erhalten. Beispielsweise können die entsprechenden Konstanten $n_i$ und $r_i$ dem Positionsbestimmer vorbekannt sein. Alternativ dazu kann der Positionsbestimmer die Konstanten $n_i$ und $r_i$, über eine Schnittstelle oder durch eine Bildauswertung erhalten. Die genannten Konstanten können auch durch einen Benutzer eingegeben werden. Zusammenfassend ist somit festzuhalten, dass es vorteilhaft ist, wenn der Positionsbestimmer die Lage der Linie in der genannten Darstellungsweise erhält, da diese Darstellungsweise sich für eine Auswertung als vorteilhaft herausgestellt hat. Allerdings kann der Positionsbestimmer natürlich auch ausgelegt sein, um die genannten Konstanten $n_i$ und $r_i$, von einer anderen Darstellungsform herzuleiten, beispielsweise von einer Darstellungsform, in der die Linien vorbestimmter oder bekannter Lage durch einen Punkt der Linie und einen Richtungsvektor beschrieben werden.

In einem bevorzugten Ausführungsbeispiel kann der Positionsbestimmer ausgelegt sein, um eine Information über die Lage der Linien vorbestimmter oder bekannter Lage unter Verwendung einer in einem eindimensionalen oder 2-dimensionalen optischen Code enthaltenen Information zu bestimmen. So kann der Positionsbestimmer beispielsweise ausgelegt sein, um einen Streifencode bzw. "Barcode" auszuwerten, der die Information über die Lage der Linien vorbestimmter oder bekannter Lage codiert. Alternativ dazu kann der Positionsbestimmer auch ausgelegt sein, um einen 2-dimensionalen optischen Code (z.B. einen QR-Code) auszuwerten, der eine Information über die Lage der Linien vorbestimmter oder bekannter Lage trägt. Der Positionsbestimmer kann somit beispielsweise durch Auswertung einer optisch codierten Information die Lage der Linien vorbestimmter oder bekannter Lage ermitteln, was eine einfache Konfiguration des Positionsbestimmers ohne manuelle Einstellung ermöglicht.

Bei einem bevorzugten Ausführungsbeispiel kann der Positionsbestimmer ausgelegt sein, um Parameter $k_i$ zu bestimmen, die die Schnittpunkte in einem Koordinatensystem in der Form $p_i = p_0 + k_i s$ beschreiben. Hierbei kann beispielsweise $p_i$ einen Positionsvektor des i-ten Schnittpunkts (z.B. ein Schnittpunkt der projizierten Linie mit einer i-ten Linie vorbestimmter oder bekannter Lage) sein. $p_0$ kann beispielsweise ein Ortsvektor eines Koordinatenursprungs eines Koordinatensystems, das der projizierten Linie zugeordnet ist, sein. s kann beispielsweise einen Einheitsabschnitt, wie beispielsweise einen Einheitsvektor des Koordinatensystems, das der projizierten Linie zugeordnet ist, definieren. Somit kann $k_i$ beispielsweise ein skalarer Parameter sein, der dem i-ten Schnittpunkt (mit Koordinatenvektor $p_i$) zugeordnet ist. Somit kann beispielsweise der Positionsbestimmer für jeden der Schnittpunkte (mit Index i) einen zugehörigen Parameter $k_i$ bestimmen. Die Bestimmung des Parameters $k_i$ kann beispielsweise auf einer Bestimmung eines (u.U. mittleren) Einheitsabschnitts s (der beispielsweise eine Richtung einer Regressionsgerade durch die Schnittpunkte in der Bildinformation beschreibt) und einer Festlegung eines Koordinatenursprungs eines Koordinatensystems, das der projizierten Linie zugeordnet ist, basieren. Der Koordinatenursprung, beschrieben durch den Koordinatenvektor $p_0$, kann beispielsweise beliebig entlang der (Regressions-)Gerade durch die Schnittpunkte festgelegt werden, wobei die Werte von $k_i$ entsprechend variieren. Durch entsprechende Bestimmung der Parameter $k_i$ wird eine effiziente Bestimmung der Lage der (Regressions-)Gerade durch die Schnittpunkte in einem Koordinatensystem der Linien vorbestimmter oder bekannter Lage ermöglicht.

In einem bevorzugten Ausführungsbeispiel kann der Positionsbestimmer ausgelegt sein, um ein Gleichungssystem exakt oder näherungsweise (z.B. im Sinne einer Kleinste-Fehlerquadrate-Lösung) zu lösen, um die Parameter $p_0$ und s, die die Lage der projizierten Linie (beispielsweise in einem Koordinatensystem der Linien vorbestimmter oder bekannter Lage) beschreiben, zu bestimmen. Das entsprechende Gleichungssystem kann beispielsweise als bekannte Größen Informationen, die Lage der Linien vorbestimmter oder bekannter Lage definieren, sowie die Parameter $k_i$ enthalten. Das Gleichungssystem kann im Übrigen als unbekannte Größen die Lage des Koordinatenursprungs der (Regressions-)Gerade durch die Schnittpunkte in dem Koordinatensystem der Linien vorbestimmter oder bekannter Lage sowie den Richtungsvektor, der die Richtung der (Regressions-)Gerade durch die Schnittpunkte beschreibt (in dem Koordinatensystem der Linien vorbestimmter oder bekannter Lage) enthalten. Somit ist es möglich, durch die Lösung eines (möglicherweise überbestimmten) linearen Gleichungssystems die Lage der (Regressions-)Gerade durch die Schnittpunkte in dem Koordinatensystem der Linien vorbestimmter oder bekannter Lage zu bestimmen. Dadurch kann effektiv die Lage der projizierten Linie in dem Koordinatensystem der Linien vorbestimmter oder bekannter Lage bestimmt werden. Durch die genannte Vorgehensweise kann die Position der projizierten Linie in dem Koordinatensystem der Linien vorbestimmter oder bekannter Lage in effizienter Weise ermittelt werden, wobei herkömmliche und effiziente Mittel zur Lösung der Gleichungssysteme (auch im Sinne einer Lösung mit kleinstem Fehlerquadrat bei überbestimmten Gleichungssystemen) herangezogen werden können.

Bei einem bevorzugten Ausführungsbeispiel kann die Vorrichtung zur 3-dimensionalen Vermessung eines Objekts ein Trägerbauteil aufweisen, das ausgelegt ist, um ein Messobjekt zu tragen, und das eine Mehrzahl von Linien vorbestimmter oder bekannter Lage zur Verwendung durch den Positionsbestimmer aufweist. Indem die Linien vorbestimmter oder bekannter Lage an dem Trägerbauteil, das ausgelegt ist, um das Messobjekt zu tragen, angeordnet werden, kann somit die Lage der projizierten Linie auf dem Trägerbauteil ermittelt werden. Dabei kann beispielsweise auf die Lage der projizierten Linie, oder einer Ebene, in der die Linie projiziert wird, im Hinblick auf das Messobjekt gefolgert werden. Die Linien vorbestimmter oder bekannter Lage sind dabei beispielsweise derart auf dem Trägerbauteil angeordnet, dass eine eindeutige Lösung des oben beschriebenen linearen Gleichungssystems möglich ist, wodurch wiederum eine eindeutige Bestimmung der Lage der projizierten Linie möglich ist.

Bei einem Ausführungsbeispiel können beispielsweise vier Linien vorhanden sein, die beispielsweise alle nicht zueinander parallel sind, oder von denen höchstens zwei zueinander parallel sind.

Bei einem bevorzugten Ausführungsbeispiel kann das Trägerbauteil zumindest vier Linien vorbestimmter oder bekannter Lage aufweisen. Durch eine derartige Anzahl an Linien kann beispielsweise eine eindeutige Bestimmung der Lage der projizierten Linie ermöglicht werden.

Bei einem weiteren bevorzugten Ausführungsbeispiel können die Linien vorbestimmter oder bekannter Lage paarweise einen Winkel von zumindest 2° einschließen, oder es kann zumindest eine Teilmenge der Linien vorbestimmter oder bekannter Lage paarweise einen Winkel von zumindest zwei Grad einschließen. Indem eine Parallelität von Linien vermieden wird, oder indem zu kleine Winkel zwischen den Linien vermieden werden, kann beispielsweise eine Eindeutigkeit der Bestimmung der Lage der projizierten Linie erreicht werden, oder es kann eine Genauigkeit der Bestimmung der Lage der projizierten Linie verbessert werden.

Bei einem bevorzugten Ausführungsbeispiel kann die Vorrichtung eine Kamera zur Bereitstellung der Bildinformation und/oder eine Projektionseinrichtung zur Erzeugung der projizierten Linie aufweisen. Dabei sind die Kamera und/oder die Projektionseinrichtung in Bezug auf das Trägerbauteils beweglich. Hierbei ermöglicht es die auf der Bildinformation basierende Bestimmung der Lage der projizierten Linie, die Lage der projizierten Linie unabhängig von mechanischen Positionsgebern zu bestimmen. Somit wird der mechanische Aufbau erleichtert und verbilligt. Im Übrigen muss beispielsweise eine Führung der Projektionseinrichtung (die beispielsweise die projizierte Linie erzeugt) keine besonderen Voraussetzungen im Hinblick auf die Genauigkeit oder Lage-Reproduzierbarkeit erfüllen. Vielmehr kann die Lage der projizierten Linie (und basierend darauf auch eine Information über die Lage einer Ebene, innerhalb derer die Projektionsstrahlen liegen) aus der Bildinformation abgeleitet werden.

Bei einem bevorzugten Ausführungsbeispiel kann der Positionsbestimmer ausgelegt sein, um eine Lage der projizierten Linie in Bezug auf das Trägerbauteil (also z.B. in Bezug auf eine Unterlage) zu ermitteln. Es wurde erkannt, dass eine Kenntnis der Lage der projizierten Linie in Bezug auf das Trägerbauteil einen in diesen Fällen ausreichenden Rückschluss auf die Lage der Projektionseinrichtung oder auf die Lage einer Ebene, in der die Projektionsstrahlen liegen, ermöglicht.

Bei einem weiteren bevorzugten Ausführungsbeispiel kann der Positionsbestimmer ausgelegt sein, um die Funktion einer Auslöseeinrichtung (auch als Trigger-Einrichtung bezeichnet) zu erfüllen. In dem Fall erhält der Positionsbestimmer, der auch als Auslöseeinrichtung dient, eine Bildinformation von einer Messkamera und ist ausgelegt, um abhängig von einem Bildinhalt der Bildinformation eine Messausgabe, wie beispielsweise eine Weiterleitung der Bildinformation zu einer Auswerteeinrichtung zur Bestimmung von Vermessungsergebnissen, oder eine Auswertung der Bildinformation durch eine Auswerteeinrichtung zur Bestimmung von Vermessungsergebnissen, auszulösen. In anderen Worten, es kann beispielsweise ein Ergebnis der Positionsbestimmung (also beispielsweise eine Information über eine Lage der projizierten Linie) verwendet werden, um eine Messausgabe (beispielsweise die Weiterleitung der Bildinformation an eine Auswerteeinrichtung zur Bestimmung von Vermessungsergebnissen) oder eine Auswertung der Bildinformation durch eine Auswerteeinrichtung zur Bestimmung von Vermessungsergebnissen auszulösen. Somit kann beispielsweise eine Messausgabe, oder eine Auswertung der Bildinformation durch eine Auswerteeinrichtung zur Bestimmung von Vermessungsergebnissen, ansprechend darauf erfolgen, dass der Positionsbestimmer erkennt, dass die projizierten Linie eine bestimmte Lage aufweist. Alternativ dazu kann beispielsweise auch die Messausgabe oder die Auswertung der Bildinformation ausgelöst werden, wenn durch den Positionsbestimmer erkannt wird, dass sich die Lage der projizierten Linie im Hinblick auf eine bei einer vorherigen Messausgabe oder bei einer vorherigen Auswertung der Bildinformation vorhandene Lage in einer bestimmten Weise verändert hat. Somit kann beispielsweise eine Auslösung der Messausgabe (oder auch eine Auswertung der Bildinformation durch eine Auswerteeinrichtung zur Bestimmung von Vermessungsergebnissen) ausschließlich basierend auf dem Bildinhalt erfolgen. Es können also mechanische Lagesensoren eingespart werden, oder es kann die Notwendigkeit, das zu vermessende Objekt in einer bestimmten Weise - beispielsweis mit konstanter Geschwindigkeit - zu bewegen, entfallen.

Es kann also aufgrund der durch den Positionsbestimmer durchgeführten Bildanalyse (und basierend auf der durch den Positionsbestimmer erhaltenen Information über die Lage der projizierten Linie) die Messausgabe oder die Auswertung der Bildinformation abhängig von der Bildanalyse ausgelöst werden.

So kann also durch das erfindungsgemäße Konzept eine Bildinformation, die einen Laser-lichtschnitt zeigt, analysiert werden, um beispielsweise die Information über die Lage der projizierten Linie zu bestimmen. Basierend auf dieser Analyse kann die Weiterleitung der Bildinformation oder die Auswertung der Bildinformation durch die Auswerteeinrichtung zur Bestimmung von Vermessungsergebnissen ausgelöst werden.

Bei einem bevorzugten Ausführungsbeispiel können also unter Verwendung eines Laser-lichtschnitts (oder eines anderen Lichtschnitts) 3-dimensionale Marken (beispielsweise auf einer Oberfläche einer Unterlage, auf der sich ein Messobjekt befindet) oder 2-dimensionale optische Eigenschaften entlang einer Laserlinie (z.B. einer durch einen Laser auf einer ebenen oder gebogenen Fläche beschriebenen Linie) als Merkmale erkannt werden, und es kann abhängig von erkannten Merkmalen die Weiterleitung der Bildinformation oder die Auswertung der Bildinformation durch die Auswerteeinrichtung zur Bestimmung von Vermessungsergebnissen ausgelöst werden. Die 3-dimensionalen Marken auf der Oberfläche oder die variablen 2-dimensionalen optischen Eigenschaften entlang der Laserlinie können beispielsweise die Mehrzahl von Linien vorbestimmter oder bekannter Lage beschreiben.

Bei einem bevorzugten Ausführungsbeispiel kann im Übrigen eine Information über eine Zuverlässigkeit einer Linienerkennung oder eine Information über eine Breite einer Linie erhalten werden (beispielsweise zusätzlich zu der Information über die Information über die Schnittpunkte der projizierten Linie mit einer Mehrzahl von Linien vorbestimmter oder bekannter Lage). Somit kann abhängig davon die Weiterleitung der Bildinformation oder die Auswertung der Bildinformation durch die Auswerteeinrichtung zur Bestimmung von Vermessungsergebnissen ausgelöst werden. Durch die Berücksichtigung weiterer Informationen, z.B. über eine Zuverlässigkeit einer Linienerkennung oder über eine Breite einer Linie, kann die Zuverlässigkeit bei der Auslösung der Weiterleitung oder bei der Auslösung der Auswertung der Bildinformation gesteigert werden.

Bei einem bevorzugten Ausführungsbeispiel kann, zusätzlich zu der Bestimmung der Lage der projizierten Linie, eine Erkennung erfolgen, wenn der Bildinhalt sich gegenüber einem Referenzbildinhalt um zumindest eine vorgegebene Verschiebung (oder um mehr als eine vorgegebene Verschiebung) verschoben hat. Somit kann auch abhängig von der Erkennung der Verschiebung die Weiterleitung der Bildinformation oder die Auswertung der Bildinformation ist die Auswerteeinrichtung zur Bestimmung von Vermessungsergebnissen ausgelöst werden. Indem zusätzlich zur Information über die Lage der projizierten Linie eine Verschiebungsinformation ausgewertet wird, kann die Auslösung der Weiterleitung der Bildinformation oder der Auswertung der Bildinformation noch zuverlässiger gestaltet werden.

Bei einem bevorzugten Ausführungsbeispiel kann basierend auf einem Bildinhalt eine Bewegung einer Kamera, durch die die Bildinformation erfolgt, und/oder eine Verschiebung einer Lichtquelle, die das Messobjekt bestrahlt, und/oder eine Bewegung des Messobjekts, bestimmt oder abgeschätzt werden. In diesem Fall kann die Auslösung der Weiterleitung der Bildinformation oder der Auswertung der Bildinformation durch die Auswerteeinrichtung zur Bestimmung von Vermessungsergebnissen abhängig von der Bestimmung oder Abschätzung der Verschiebung ausgelöst werden.

Bei einem bevorzugten Ausführungsbeispiel ist der Positionsbestimmer ausgelegt, um bei der Analyse des Bildinhalts eine 3-dimensionale Rekonstruktion zur Bewegungsschätzung auszunutzen und/oder einen Vergleich von Grauwert-Merkmalen in einer Vorschubrichtung durchzuführen und/oder Marken zu detektieren und/oder farbliche Ausdrücke zu detektieren. Diese Analyse des Bildinhalts kann beispielsweise ergänzend zu der Erkennung der Schnittpunkte erfolgen und beispielsweise unterstützend bei der Auslösung verwendet werden.

Bei einem bevorzugten Ausführungsbeispiel kann der Positionsbestimmer ausgelegt sein, um bei der Analyse des Bildinhalts Informationen oder Oberflächeninformationen (beispielsweise im Hinblick auf Risse und/oder Spalten und/oder Kratzer) auszuwerten. Dadurch kann eine Positionsbestimmung und/oder eine Auslösung verbessert werden.

Bei einem weiteren Ausführungsbeispiel kann der Positionsbestimmer ausgelegt sein, um Bildinformationen, die aus mehreren verschiedenen Richtungen aufgenommen werden, zu berücksichtigen. Dadurch kann auch die Qualität der Positionsbestimmung bzw. der Auslösung verbessert werden.

Bei einem weiteren bevorzugten Ausführungsbeispiel kann der Positionsbestimmer ausgelegt sein, um eine oder mehrere Polarisationseigenschaften oder eine Änderung einer oder mehrerer Polarisationseigenschaften zu bestimmen (beispielsweise, um verschiedene Materialien zu detektieren, um eine Variation der Eindringtiefe eines Laserstrahls zu erkennen und/oder um eine Relativbewegung zwischen einer Kamera und dem Messobjekt zu erkennen und/oder um eine Relativbewegung zwischen der Lichtquelle und dem Messobjekt zu erkennen) und in Abhängigkeit davon die Weiterleitung der Bildinformation oder die Auswertung der Bildinformation durch die Auswerteeinrichtung zur Bestimmung von Vermessungsergebnissen auszulösen. Insofern kann zusätzliche Information zur Auslösung verwendet werden.

Bei einem weiteren Ausführungsbeispiel kann der Positionsbestimmer ausgelegt sein, um zu entscheiden, ob ein Ergebnis ausgegeben wird oder ob die Ausgabe unterdrückt wird. Insofern kann basierend auf der Bestimmung der Lage der projizierten Linie (oder basierend auf zusätzlichen Merkmalen) festgelegt werden, ob eine weitere Auswertung bzw. eine Ausgabe einer Bildinformation erfolgen soll oder nicht.

Bei einem weiteren bevorzugten Ausführungsbeispiel kann der Positionsbestimmer ausgelegt sein, um verschiedene Merkmale des Bildinhalts zu analysieren und/oder um Merkmale in verschiedenen Bereichen des Bildinhalts zu analysieren. Insofern kann die Positionsbestimmung und die Entscheidung über die Auslösung verbessert werden.

Bei einem weiteren bevorzugten Ausführungsbeispiel kann der Positionsbestimmer ausgelegt sein, um ein oder mehrere Steuersignale für einen oder mehrere Laserliniengeneratoren zu erzeugen, und/oder um ein oder mehrere Steuersignale für eine oder mehrere Beleuchtungseinrichtungen zu erzeugen, um die Beleuchtung des Messobjekts abhängig von einem Bildinhalt der Bildinformation zu verändern. Beispielsweise kann auch basierend auf der Bestimmung der Lage der projizierten Linie ein Einfluss auf die Laserlichtschnitt-Triangulationen oder auf andere Beleuchtungseinrichtungen ausgeübt werden, um beispielsweise die Lage der projizierten Linie in einer gewünschten Weise einzustellen.

Bei einem bevorzugten Ausführungsbeispiel kann der Positionsbestimmer ausgelegt sein, um basierend auf einem Bildinhalt der Bildinformation zu erkennen, ob eine interessierende Region des Messobjekts vermessbar ist oder nicht, und um abhängig davon die Weiterleitung der Bildinformation oder die Auswertung der Bildinformation durch die Auswerteeinrichtung zur Bestimmung von Vermessungsergebnissen auszulösen. Auf diese Weise kann eine Weiterleitung unbrauchbarer Information oder eine Auswertung von unbrauchbarer Information unterbunden werden.

Bei einem bevorzugten Ausführungsbeispiel kann der Positionsbestimmer ausgelegt sein, um ansprechend auf eine Erkennung einer Veränderung einer relativen Lage zwischen der projizierten Linie und den Linien vorbestimmter oder bekannter Lage eine Ausgabe oder eine Auswertung eines Profils (beispielsweise eines Schnittbilds des zu vermessenden Objekts mit einer durch die projizierte Linie aufgespannten Ebene) auszulösen. Insofern kann eine selbsttätige Auslösung erfolgen, wenn durch den Positionsbestimmer erkannt wird, dass die projizierten Linie eine geeignete Ausrichtung hat, oder dass sich die Lage der projizierten Linie gegenüber einer vorherigen Lage derart verändert hat, dass es sinnvoll oder lohnenswert erscheint, eine neue Auswertung vorzunehmen.

Bei einem bevorzugten Ausführungsbeispiel ist die Vorrichtung ausgelegt, um ein Messobjekt dreidimensional abzutasten, ohne dass eine Kamera zum Erzeugen der Bildinformation und/oder eine Lichtquelle zur Bestrahlung des Messobjekts fest geführt ist, oder wobei die Kamera zur Erzeugung der Bildinformation und/oder die Lichtquelle zur Bestrahlung des Messobjekts für eine manuelle Führung ausgelegt ist. Dadurch, dass die Position der projizierten Linie (die z.B. durch die Lichtquelle erzeugt wird) beispielsweise relativ zu den Linien vorbestimmter oder bekannter Lage bestimmt wird, kann erreicht werden, dass eine feste Führung, die eine relative Lage zwischen der Lichtquelle und/oder der Kamera und dem zu vermessenden Objekt festlegt, entbehrlich wird. Vielmehr kann beispielsweise die Lichtquelle und/oder die Kamera zum Erzeugen der Bildinformation manuell geführt werden, wobei die Lage der durch die Lichtquelle projizierten Ebene oder zumindest die Lage der auf eine Trägerplatte projizierten Linie auf optischem Wege ermittelt werden kann. Somit kann ein mechanischer Aufbau der Vorrichtung wesentlich vereinfacht werden, und die Flexibilität bei der Handhabung wird deutlich erhöht. Bei einem bevorzugten Ausführungsbeispiel ist die Vorrichtung ausgelegt, um ein Objekt im Außenraum zu erfassen (z.B. abzuscannen), um einen Fahrweg (z.B. eine Straße oder eine Schiene) zu vermessen oder um eine Fehlerstelle zu erkennen oder zu vermessen. Eine derartige Anwendung wird dadurch begünstigt bzw. ermöglicht, dass die Lage der auf eine Fläche projizierten Linie auf optischem Wege ermittelt werden kann.

Ein Ausführungsbeispiel gemäß der Erfindung schafft ein Verfahren zur 3-dimensionalen Vermessung eines Objekts gemäß des unabhängigen Anspruchs 15. Das Verfahren umfasst ein Empfangen einer Bildinformation, die Schnittpunkte einer projizierten Linie mit einer Mehrzahl von Linien vorbestimmter oder bestimmter oder bekannter Lage zeigt, und ein Bestimmen einer Lage der projizierten Linie basierend auf der empfangenen Bildinformation. Das entsprechende Verfahren basiert auf den gleichen Überlegungen wie die oben erörterte Vorrichtung. Im Übrigen kann das Verfahren um alle Merkmale und Funktionalitäten der oben beschriebenen Vorrichtung ergänzt werden, und zwar einzeln oder in Kombination.

Ein weiteres Ausführungsbeispiel gemäß der Erfindung schafft ein Computerprogramm zur Durchführung des genannten Verfahrens gemäß des unabhängigen Anspruchs 16, wenn das Computerprogramm auf einem Computer abläuft.

Figurenkurzbeschreibung

Ausführungsbeispiele gemäß der vorliegenden Erfindung werden nachfolgend Bezug nehmend auf die beiliegende Figuren näher erläutert.

Es zeigen:

Fig. 1 eine schematische Darstellung einer Vorrichtung zur 3-dimensionalen Vermessung eines Objekts, gemäß einem Ausführungsbeispiel der vorliegenden Erfindung;

Fig. 2 ein Blockschaltbild einer Vorrichtung zur 3-dimensionalen Vermessung eines Objekts, gemäß einem Ausführungsbeispiel der vorliegenden Erfindung;

Fig. 3 eine schematische Darstellung einer Vorrichtung zur 3-dimensionalen Vermessung eines Objekts, gemäß einem Ausführungsbeispiel der vorliegenden Erfindung;

Fig. 4 eine schematische Darstellung eines Aufbaus zur Lokalisation einer Laserlinie in Bezug zu einem Messobjekt mittels Markierungen auf einer Unterlage (Zeiger) gemäß einem Ausführungsbeispiel der vorliegenden Erfindung;

Fig. 5 eine schematische Darstellung einer Anordnung und Auswertung von Markierungen auf der Unterlage, gemäß einem Ausführungsbeispiel der vorliegenden Erfindung;

Fig. 6 eine schematische Darstellung des Ablaufs bei einer Bestimmung einer Position einer projizierten Linie, gemäß einem Ausführungsbeispiel der vorliegenden Erfindung; und

Fig. 7 eine schematische Darstellung einer Vorrichtung zur 3-dimensionalen Vermessung eines Objekts;

Fig. 8 ein Flussdiagramm eines Verfahrens, gemäß einem Ausführungsbeispiel der vorliegenden Erfindung; und

Fig. 9 ein Flussdiagramm eines Verfahrens gemäß einem Ausführungsbeispiel der vorliegenden Erfindung.

Detaillierte Beschreibung der Ausführungsbeispiele

Details der Ausführungsbeispiele werden nachfolgend Bezug nehmend auf die oben erläuterten Figuren beschrieben.

Es sei darauf hingewiesen, dass Details der verschiedenen Ausführungsbeispiele miteinander kombinierbar sind, soweit keine zwingenden Gründe dagegen sprechen, da der Schutzumfang der Erfindung lediglich durch die nachstehenden Patentansprüche beschränkt ist.

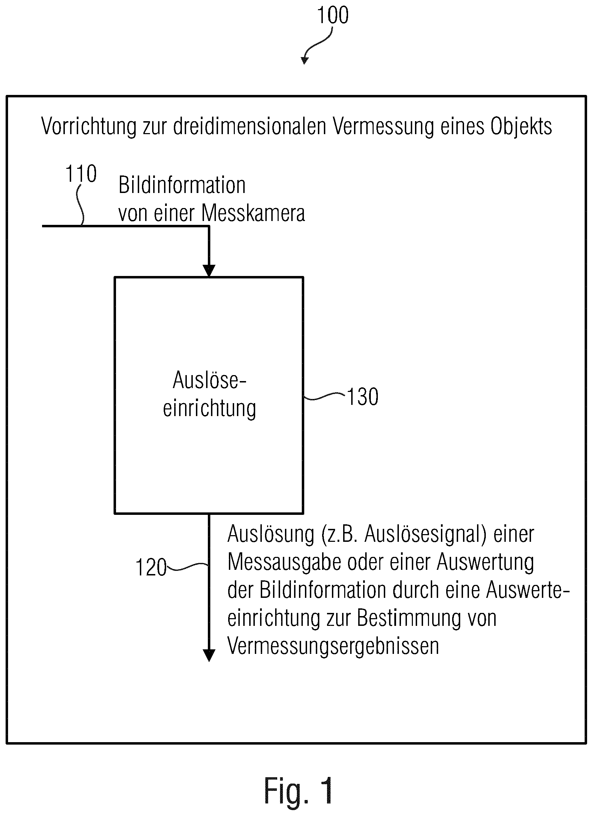

1. Vorrichtung zur 3-dimensionalen Vermessung eines Objekts, gemäß Fig. 1

Fig. 1 zeigt eine schematische Vorrichtung zur 3-dimensionalen Vermessung eines Objekts, gemäß einem Ausführungsbeispiel der vorliegenden Erfindung. Die Vorrichtung 100 zur 3-dimensionalen Vermessung eines Objekts ist ausgelegt, um eine Bildinformation 110 von einer Messkamera zu erhalten bzw. zu erfassen. Die hier nicht gezeigte Messkamera kann beispielsweise Teil der Vorrichtung 100 sein, oder kann eine externe Komponente sein. Die Vorrichtung 100 ist insbesondere ausgelegt, um ein Auslösesignal zu erhalten, das beispielsweise eine Messausgabe oder eine Auswertung der Bildinformation durch eine Auswerteeinrichtung zur Bestimmung von Vermessungsergebnissen auslöst. Das Auslösesignal ist hier beispielsweise mit 120 bezeichnet. Die Vorrichtung 100 umfasst eine Auslöseeinrichtung 130, die hier auch als "Trigger-Einrichtung" bezeichnet wird. Die Auslöseeinrichtung 130 ist ausgelegt, um die Bildinformation 110 von der Messkamera zu erhalten und um abhängig von dem Bildinhalt der Bildinformation eine Messausgabe (beispielsweise eine Weiterleitung der Bildinformation an eine Auswerteeinrichtung zur Bestimmung von Vermessungsergebnissen) oder eine weitere, detailliertere Auswertung der Bildinformation durch die Auswerteeinrichtung zur Bestimmung von Vermessungsergebnissen auszulösen.

Somit ist festzuhalten, dass die Auswerteeinrichtung 130 beispielsweise anhand der von der Messkamera erhaltenen Bildinformation 110 festlegen kann, wann eine Bildinformation von der Messkamera (bzw. die Bildinformation 110 von der Messkamera) für eine weitere, detaillierte Auswertung verwendet wird. Die Auslöseeinrichtung 130 kann zu diesem Zweck ein Auslösesignal erzeugen, das entweder eine Weitergabe der Bildinformation 110 auslöst, oder das eine tatsächliche Verwendung der Bildinformation 110 für eine weitere, detailliertere Auswertung auslöst.

Somit ist festzuhalten, dass durch eine erste Stufe einer Bildverarbeitung, die durch die Auslöseeinrichtung 130 ausgeführt wird, entschieden werden kann, welche Bildinformation (z.B. welches Bild aus einer Sequenz von Bildern) für eine weitere genauere Auswertung (beispielsweise für eine 3-dimensionale Vermessung eines Objekts) herangezogen wird. Somit kann die Auslöseeinrichtung 130 beispielsweise aufgrund einer Bilderkennung (oder allgemein abhängig von einem Bildinhalt der Bildinformation 110) einen Zeitpunkt erkennen, zu dem die Bildinformation für eine weitere, detailliertere Auswertung verwendbar ist. Somit kann beispielsweise erreicht werden, dass eine Ausgabe der Bildinformation 110 von einer Messkamera bzw. von einem Bildsensor der Messkamera an eine Auswerteeinrichtung zur Bestimmung von Vermessungsergebnissen nur dann erfolgt, wenn die Auslöseeinrichtung 130 erkennt, dass die Bildinformation eine weitere detailliertere Auswertung als erfolgversprechend erscheinen lässt. Beispielsweise kann die Auswerteeinrichtung 130 basierend auf dem Bildinhalt der Bildinformation bestimmen, ob die Bildinformation gewisse Grundvoraussetzungen erfüllt, die für die weitere, detailliertere Auswertung der Bildinformation durch die Auswerteeinrichtung zur Bestimmung von Vermessungsergebnissen erforderlich sind. Alternativ oder zusätzlich kann die Auslöseeinrichtung 130 beispielsweise bestimmen, ob sich der Bildinhalt der Bildinformation im Hinblick auf eine für eine frühere (weitere) detaillierte Auswertung herangezogene Bildinformation ausreichend stark verändert hat. Somit kann beispielsweise eine mehrmalige Ausgabe oder Auswertung von nahezu identischer Bildinformation vermieden werden.

Die Auslöseeinrichtung 130 kann beispielsweise dann besonders sinnvoll sein, wenn ein geeigneter oder optimaler Zeitpunkt zur Ausgabe der Bildinformation oder zur weiteren detaillierten Auswertung der Bildinformation nicht durch andere, beispielsweise mechanische, Sensoren erkannt werden kann. Im Übrigen ist die Erkennung des geeigneten oder optimalen Zeitpunkts für die Ausgabe oder für die weitere detaillierte Auswertung der Bildinformation besonders hilfreich, wenn eine Lichtquelle und/oder eine Kamera, die bei der 3-dimensionalen Vermessung des Objekts zur Beleuchtung des Objekts verwendet werden, frei beweglich sind.

Im Folgenden werden einige Details im Hinblick auf die Vorrichtung zur 3-dimensionalen Vermessung eines Objekts und im Hinblick auf die Auslöseeinrichtung beschrieben, die für sich genommen verwendet werden können, oder die optional in Verbindung mit dem oben beschriebenen Ausführungsbeispiel verwendet werden können.

Gemäß einem Aspekt der vorliegenden Erfindung kann die Vorrichtung 100 beispielsweise im Zusammenhang mit einem System verwendet werden, das eine Laserlichtschnitt-Abtastung eines Objekts (beispielsweise zur 3-dimensionalen Vermessung des Objekts) durchführt. Die Laserlichtschnitt-Abtastung wird auch als "Laserlichtschnitt-Scan" bezeichnet.

Die hierin beschriebene Vorrichtung zur 3-dimensionalen Vermessung eines Objekts bietet bei einigen Ausführungsbeispielen den Vorteil, dass eine beliebige Positionierung einer Laserlinie (oder allgemein einer projizierten Linie) über einem Messobjekt möglich ist, was beispielsweise ein freihändiges Abtasten (bzw. Scannen) ermöglicht. Bei einigen Ausführungsbeispielen ermöglicht die hierin beschriebene Vorrichtung zur 3-dimensionalen Vermessung eines Objekts auch eine Unabhängigkeit von Positionsgebern, beispielsweise eine Unabhängigkeit von herkömmlichen mechanischen Positionsgebern, die eine Relation zwischen einem zu erfassenden (oder zu vermessenden) Objekt (oder zumindest einem Trägerbauteil, das das zu erfassende Objekt trägt) und einem Laserliniengenerator (oder mehreren Laserliniengeneratoren) und/oder einer Messkamera (oder mehreren Messkameras) erfassen. Gemäß einem weiteren Aspekt der vorliegenden Erfindung ermöglichen einige Ausführungsbeispiele eine optimale Auflösung je nach Scanaufgabe und Oberfläche/Struktur des Messobjekts.

Im Folgenden werden eine ganze Reihe von Details im Hinblick auf eine Auslösung bzw. "Triggerung" beschrieben, die einzeln oder in Kombination mit dem Ausführungsbeispiel gemäß der Fig. 1 (oder in Verbindung mit den weiteren hierin beschriebenen Ausführungsbeispielen) verwendet werden können.

Gemäß einem Aspekt der Erfindung unterscheidet sich die erfindungsgemäße Lösung zur Auslösung bzw. Triggerung der Bildaufnahme von herkömmlichen Konzepten unter anderem dadurch,

- dass keine elektrische Kopplung zwischen Vortrieb des Messobjekts und Messsystems zum Beispiel durch Inkrementalgeber oder Zeitgeben (Timer) für ein festes Zeitintervall besteht; und
- die Triggerung der Messkamera ausschließlich durch den Bildinhalt bzw. daraus abgeleitete Merkmale erfolgt (oder die Auslösung einer Messausgabe von der Messkamera ausschließlich durch den Bildinhalt folgt).

Dies bedeutet, dass das Messsystem (beispielsweise die Auslöseeinrichtung 130) permanent (oder zumindest über einen ausgedehnten Zeitraum hinweg) eine Bildanalyse auf der Grundlage geeigneter Merkmale durchführt und nur bei Erfüllung bestimmter vordefinierter Kriterien eine Bildausgabe vornimmt, also von außen betrachtet ein selbstausgelöstes bzw. selbstgetriggertes Messergebnis ausgibt. Dabei können beispielsweise ein oder mehrere der im Folgenden beschriebenen Merkmale zur Detektion einer Aufnahme (oder zur Auslösung einer Messausgabe oder einer Auswertung der Bildinformation durch eine Auswerteeinrichtung zur Bestimmung von Vermessungsergebnissen) gewählt werden.

Beispielsweise können Merkmale eines Laserlichtschnitts zur Detektion einer Aufnahme (bzw. zur Auslösung) verwendet werden. Beispielsweise ist es möglich, 3-dimensionale Marken auf der Oberfläche einer Unterlage, auf der sich das Messobjekt befindet, oder 3-dimensionale Marken am Messobjekt (die beispielsweise in einem Laserlichtschnitt ersichtlich sind) zur Detektion einer Aufnahme zu wählen. Alternativ oder zusätzlich ist es möglich, 2-dimensionale optische Eigenschaften entlang der Laserlinie zur Detektion einer Aufnahme (oder zur Auslösung) zu verwenden. Alternativ oder zusätzlich ist es möglich, allgemeine Merkmale aus einer Verarbeitungskette innerhalb der Messkamera zur Detektion einer Aufnahme (oder zur Auslösung) zu wählen. Zusammengefasst kann man also sagen, dass bei Auswertung eines Laserlichtschnitts dreidimensionale Marken auf der Oberfläche der Unterlage, auf der sich das Messobjekt befindet, und/oder 3-dimensionale Marken am Messobjekt und/der 2-dimensionale optische Eigenschaften entlang der Laserlinie und/oder allgemeine Merkmale aus der Verarbeitungskette innerhalb der Messkamera zur Detektion einer Aufnahme gewählt werden können.

Bei 3-dimensionalen Marken auf der Oberfläche der Unterlage, auf der sich das Messobjekt befindet, oder bei 3-dimensionalen Marken am Messobjekt kann es sich beispielsweise um Erhebungen oder Dellen (wie z.B. einen Braille-Code) und/oder um Bohrungen bzw. Löcher und/oder um Kanten und Stufen, z.B. durch einen Beginn des Messobjekts, handeln. Solche 3-dimensionalen Marken auf der Oberfläche der Unterlage, auf der sich das Messobjekt befindet, oder am Messobjekt können beispielsweise in einem Abbild des Laserlichtschnitts erkannt werden, z. B. als Helligkeitsveränderung oder als Abweichungen von einem geraden Verlauf des Laserlichtschnitts. In anderen Worten eine Messausgabe oder eine weitere Auswertung der Bildinformation kann beispielsweise ausgelöst werden, wenn in einer Bildinformation, die ein Abbild eines Laserlichtschnitts zeigt, erkannt wird, dass der Laserlichtschnitt eine oder mehrere 3-dimensionale Marken auf der Oberfläche der Unterlage, auf der sich das Messobjekt befindet, oder eine oder mehrere 3-dimensionale Marken an dem Messobjekt schneidet. Unter Umständen können hier auch bestimmte Eigenschaften der 3-dimensionalen Marken, beispielsweise deren Abstand oder relative Anordnung zueinander, berücksichtigt werden. Die 3-dimensionalen Marken können optional auch durch Linien vorbestimmter oder bekannter Lage definiert werden, so dass anhand einer Bildauswertung eine Lage der projizierten Linie (also des Laserlichtschnitts) erkannt werden kann, und so dass die Auslösung der Messausgabe oder der weiteren Auswertung aufgrund der Erkennung einer bestimmten Lage der projizierten Linie (des Laserlichtschnitts) erfolgen kann.

Weiterhin können, wie oben bereits kurz erläutert, alternative oder zusätzlich 2-dimensionale optische Eigenschaften entlang der Laserlinie für die Detektion einer Aufnahme (bzw. für die Auslösung einer Messausgabe oder einer weiteren Auswertung der Bildinformation) herangezogen werden. Eine mögliche 2-dimensionale optische Eigenschaft entlang der Laserlinie kann in einer Veränderung der Reflektanz bestehen, die beispielsweise durch eine matte und/oder eine metallisierte Oberfläche hervorgerufen werden kann, oder die beispielsweise durch eine Veränderung eines Reflexionswinkels der Oberfläche hervorgerufen werden kann. So kann beispielsweise anhand einer Auswertung eines Abbilds einer Laserlinie (die durch einen Laserlichtschnitt gebildet ist) erkannt werden, wenn der Laserlichtschnitt auf einen Abschnitt mit matter Oberfläche oder mit metallisierter Oberfläche oder mit verändertem Reflexionswinkel der Oberfläche trifft bzw. einen solchen Abschnitt überstreicht. Die Erkennung einer Veränderung einer Reflektanz kann beispielsweise einfach aufgrund einer Erkennung einer veränderten Intensität des Abbilds des Laserlichtschnitts detektiert werden. Hierbei kann einerseits das bloße Vorhandensein einer Veränderung der Reflektanz oder auch ein bestimmtes räumliches Muster, mit dem sich die Reflektanz verändert, die Auslösung einer Messausgabe oder einer Auswertung der Bildinformation verursachen. Als 2-dimensionale optische Eigenschaft entlang der Laserlinie kann auch eine Veränderung einer Volumenstreuung ausgewertet werden. Dies kann beispielsweise durch das Vorhandensein einer optisch dichten Auflage auf einem volumensteuernden Material verursacht werden. Beispielsweise kann dies auch durch das Vorhandensein von Kupfer auf einem FR4-Material bzw. Trägermaterial verursacht werden. Somit kann eine Veränderung der Volumenstreuung entlang einer Laserlinie durch eine Bildverarbeitung erkannt werden, und das Vorhandensein der Veränderung der Volumenstreuung, oder ein erkanntes Muster der Veränderung der Volumenstreuung entlang der Laserlinie, kann verwendet werden, um eine Messausgabe oder eine Auswertung der Bildinformation auszulösen. Ferner kann als 2-dimensionale optische Eigenschaft entlang der Laserlinie auch das Vorhandensein eines farblichen Aufdrucks bzw. das Vorhandensein mehrerer farblicher Aufdrucke erkannt und zur Auslösung einer Messausgabe oder zur Auslösung der Auswertung der Bildinformation herangezogen werden. Ein oder mehrere farbliche Aufdrucke können beispielsweise passend bzw. komplementär zu einer Farbe der Laserlinie sein. Dadurch ist das Vorhandensein eines farblichen Aufdrucks bzw. mehrerer farblicher Aufdrucke entlang der Laserlinie in einem Abbild der Laserlinie bzw. des Laserlichtschnitts mit geringem Aufwand detektierbar uns somit zur Auslösung nutzbar.

Wird ein Laserlichtschnitt oder ein Merkmal eines Laserlichtschnitts zur Detektion einer Aufnahme (bzw. zur Auslösung einer Messausgabe oder zur Auswertung einer Bildinformation) herangezogen, so können auch allgemeine Merkmale aus der Verarbeitungskette innerhalb der Messkamera herangezogen werden, um die Auslösung zu verursachen. Beispielsweise kann als Merkmal aus der Verarbeitungskette innerhalb der Messkamera eine Zuverlässigkeit der detektierten Linie (bzw. eine entsprechende Information über die Zuverlässigkeit) herangezogen werden. So können beispielsweise Zwischenergebnisse aus der Verarbeitung der Laserlinie verwendet werden (wobei solche Zwischenergebnisse beispielsweise eine Information über die Zuverlässigkeit der detektierten Linie aufweisen können). Alternativ oder zusätzlich kann ein Start (bzw. eine Auslösung) erfolgen, sobald eine Laserlinie in dem Bild erscheint und/oder sobald durch eine Bildverarbeitung eine Laserlinie mit einem vorgegebenen Zuverlässigkeitsmaß erkannt wird. Alternativ oder zusätzlich kann auch eine lokale Breite der Laserlinie als allgemeines Merkmal aus der Verarbeitungskette innerhalb der Messkamera zur Detektion einer Aufnahme bzw. zur Auslösung einer Messausgabe oder einer Auswertung der Bildinformation herangezogen werden. Die lokale Breite der Laserlinie ist dabei ein an die Volumenstreuung oder die Reflektanz gekoppeltes Merkmal.

Zusammenfassend ist festzuhalten, dass verschiedene Informationen, die bei der Auswertung eines Laserlichtschnitts abgeleitet werden können, einzeln oder in Kombination zur Detektion einer Aufnahme bzw. zur Auslösung einer Messausgabe oder zur Auslösung einer Auswertung der Bildinformation herangezogen werden können.

Alternativ oder zusätzlich zu einer Auswertung eines Laserlichtschnitts (bzw. eines Abbilds eines Laserlichtschnitts) können auch ein Graubild und Vorschub-Korrelation zur Detektion einer Aufnahme (oder zur Auslösung einer Messausgabe oder zur Auslösung einer Auswertung der Bildinformation) herangezogen werden. Es kann beispielsweise ein Graubild ausgewertet werden, das nicht nur die projizierte Linie oder den Laserlichtschnitt zeigt, sondern ein umfassenderes Bild, beispielsweise des zu vermessenden Objekts und/oder des Trägerbauteils, das das zu vermessende Objekt trägt. Beispielsweise kann basierend auf einem Graubild eine Korrelation aufeinanderfolgender Bilder und daraus eine Ableitung einer Bewegungsinformation erfolgen, wobei die Bewegungsinformation dann zur Auslösung einer Messausgabe oder zur Auslösung einer Auswertung der Bildinformation dienen kann. Die Korrelation aufeinanderfolgender Bilder und die Ableitung der Bewegungsinformation kann beispielsweise mit einer flächigen Beleuchtung oder mit einer punktförmigen Beleuchtung zur optischen Abtastung der Oberfläche (beispielsweise einer oder mehrerer Punkte die Oberfläche) erfolgen. Bei flächiger Beleuchtung kann beispielsweise ein flächiger Bildausschnitt ausgewertet werden, und es kann eine Bewegungsinformation anhand der Auswertung eines Flächenabschnitts abgeleitet werden. Bei punktförmiger Beleuchtung einer oder mehrerer Punkte des Objekts kann beispielsweise detektiert werden, ob ein Abbild der beleuchteten Punkte sich gegenüber einem vorherigen Zustand bewegt. Alternativ oder zusätzlich zur Korrelation aufeinanderfolgender Bilder können auch optische Merkmale zur Detektion einer Aufnahme bzw. zur Auslösung einer Messausgabe oder zur Auslösung einer Auswertung einer Bildinformation herangezogen werden. Alternativ oder zusätzlich kann (beispielsweise basierend auf einem Graubild und einer Vorschub-Korrelation) eine 3-dimensionale Stereorekonstruktion auch zur Bewegungsschätzung ausgenutzt werden. Dabei können Entfernungs- bzw. Positionsinformationen zum Auslösen eines Messvorgangs (bzw. zum Auslösen einer Messausgabe oder einer Auswertung der Bildinformation) ausgenutzt werden.

Bei Verwendung eines Graubilds und einer Vorschub-Korrelation kann, alternativ oder zusätzlich zu den vorher beschriebenen Auswertungen, auch eine Detektion von Marken und farblichen Änderungen erfolgen. So können beispielsweise Marken, die an dem zu vermessenden Objekt angebracht sind, und Übergänge zwischen Bereichen unterschiedlicher Farbe ausgewertet werden, um eine Messausgabe auszulösen oder um eine Auswertung der Bildinformation auszulösen.

Alternativ oder zusätzlich zur Auswertung eines Laserlichtschnitts bzw. alternativ oder zusätzlich zur Auswertung eines Graubilds mit Vorschubkorrelation kann eine Auswertung von Höheninformationen, z.B. von Rissen, und/oder Spalten und/oder Kratzern, erfolgen. Beispielsweise kann eine Beschreibung von Rissen und Spalten z.B. durch fehlende Reflexionen mit bestimmter örtlicher Ausdehnung erfolgen. Hierbei kann es beispielsweise zu einer Auswertung von lokalen Sprüngen der Höheninformation mit bestimmter Breite und/oder zu einer Auswertung von zeitlichen Sprüngen der Höheninformation mit bestimmten zeitlichen Eigenschaften kommen. Insgesamt kann somit anhand von Höheninformationen eine Detektion einer Aufnahme (bzw. die Auslösung einer Messausgabe oder einer Auswertung einer Bildinformation) erfolgen.

Alternativ oder zusätzlich zur Auswertung eines Laserlichtschnitts bzw. alternativ oder zusätzlich zur Auswertung eines Graubilds mit Vorschubkorrelation bzw. alternativ oder zusätzlich zur Verwendung von Höheninformationen kann eine Aufnahme, beispielsweise eines zu vermessenden Objekts) aus verschiedenen Richtungen mit mehreren Kameras oder mehreren Laserliniengeneratoren in verschiedenen Lagen erfolgen, um eine Detektion einer Aufnahme zu erreichen. Dabei können beispielsweise Unterschiede in den detektierten Eigenschaften aus verschiedenen Richtungen zur Detektion einer Aufnahme herangezogen werden und/oder es können Verdeckungen oder Mehrfach-Reflexionen für eine Detektion einer Aufnahme einbezogen werden.

Alternativ oder zusätzlich zu der Auswertung eines Laserlichtschnitts bzw. alternativ oder zusätzlich zu der Auswertung eines Graubilds mit Vorschubkorrelation bzw. alternativ oder zusätzlich zu der Auswertung von Höheninformation bzw. alternativ oder zusätzlich zu der Auswertung einer Aufnahme aus verschiedenen Richtungen kann eine Änderung der Polarisation ausgewertet werden und/oder kann eine Detektion verschiedener Materialien ausgewertet werden, um eine Messausgabe oder eine Auswertung der Bildinformation auszulösen. Die Detektion verschiedener Materialien kann beispielsweise durch eine Multispektralanalyse erfolgen. Alternativ oder zusätzlich kann bei der Detektion verschiedener Materialien auch eine Erkennung der Variation der Eindringtiefe des Laserstrahls erfolgen. Somit kann die Detektion des Vorhandenseins verschiedener Materialien beispielsweise zu einer entsprechenden Auslösung einer Messausgabe oder einer Auswertung der Bildinformation dienen.

Im Folgenden werden verschiedene Aspekte im Hinblick auf eine Merkmalsbestimmung erläutert, die optional bei den hierin beschriebenen Ausführungsbeispielen eingesetzt werden können.

Beispielsweise kann eine Analyse der oben dargestellten Eigenschaften (oder Merkmale) (zum Beispiel Merkmale des Laserlichtschnitts, Merkmale des Graubilds, und so weiter) auf dem Sensor oder auf einer nachgelagerten Verarbeitungseinheit erfolgen. Beispielsweise kann der Sensor ausgelegt sein, um eine erste Analyse (beispielsweise zur Auslösung einer Messausgabe oder zur Auslösung einer weiteren detaillierteren Auswertung der Bildinformation durch eine Auswerteeinrichtung zur Bestimmung von Vermessungsergebnissen) basierend auf Analogsignalen von einem Bildsensor (also beispielsweise noch vor einer Digitalisierung) erfolgen. Alternativ dazu kann bei einigen Ausführungsbeispielen die Auswertung zur Auslösung einer Messausgabe oder zur Auslösung einer Auswertung der Bildinformation in einer separaten Verarbeitungseinheit erfolgen (beispielsweise basierend auf digitalisierten Signalen des Bildsensors).

Gemäß einem Aspekt kann eine Bildverarbeitung mittels Software oder mittels speziell dazu entwickelten Hardwareblöcken erfolgen.

Gemäß einem Aspekt der Erfindung kann eine sofortige Bestimmung der Ergebnisse ohne oder mit sehr geringer Latenz erfolgen. In anderen Worten, die durch die Auslöseeinrichtung durchgeführte, typischerweise recht einfache Auswertung kann mit hoher Geschwindigkeit erfolgen, während hingegen eine nachfolgende weitere, detailliertere Auswertung der Bildinformation durch eine Auswerteeinrichtung zur Bestimmung von Vermessungsergebnisse im Regelfall deutlich aufwendiger und zeitintensiver ist.

Gemäß einem Aspekt der Erfindung erfolgt die Auswertung (durch die Auslöseeinrichtung) zur Entscheidung, ob Ergebnisse ausgegeben werden (beispielsweise durch Auslösung einer Messausgabe) oder die Ausgabe unterdrückt wird.

Gemäß einem Aspekt der Erfindung kann eine Auswertung verschiedene Merkmale auf dem Sensorfeld an verschiedenen Regionen-von-Interesse ("Regions-of-Interest") erfolgen.

Gemäß einem weiteren Aspekt der Erfindung kann eine Nutzung der detektierten Eigenschaften zur Entscheidung der Lage der untersuchten Regionen-von-Interesse ("Regions-of-Interest") erfolgen.

Gemäß einem weiteren Aspekt der Erfindung kann eine Steuerung der Merkmalsbestimmung durch eine externe digitale Schnittstelle für synchrone oder asynchrone Parameter, anhand der die Triggerung entschieden wird, erfolgen. Beispielsweise kann über die externe digitale Schnittstelle bestimmt werden, durch welche der Merkmale eine Auslösung (Triggerung) erfolgen soll. Somit kann beispielsweise die Funktion der Auslöseeinrichtung an die jeweiligen Gegebenheiten eines Bildinhalts (z.B. eines zu vermessenden Objekts) angepasst werden.

Gemäß einem weiteren Aspekt kann beispielsweise eine direkte Ausgabe von Steuersignalen für Laserliniengeneratoren und Beleuchtungssysteme zur Veränderung bzw. Umschaltung einer Beleuchtung erfolgen. Es kann also beispielsweise die Auslöseeinrichtung Steuersignale für einen oder mehrere Laserliniengeneratoren und/oder für ein oder mehrere andere Beleuchtungssysteme erzeugen. Beispielsweise ansprechend auf die Erkennung eines Auslöseereignisses durch die Auslöseeinrichtung kann ein Laserliniengenerator angesteuert werden, um eine Laserlinie zu verändern, beispielsweise zu verschieben. Alternativ dazu kann ein Laserliniengenerator durch die Auslöseeinrichtung auch dazu veranlasst werden, eine Laserlinie zu aktivieren oder in der Intensität zu erhöhen.

Zusammenfassend ist somit festzuhalten, dass die Vorrichtung 100, wie sie anhand der Fig. 1 beschrieben wurde, optional um viele Details ergänzt werden kann. Die Auslösung durch die Auslöseeinrichtung 130 kann optional basierend auf Merkmalen, die durch einen Laserlichtschnitt erhalten wurden, und/oder basierend auf Merkmalen, die durch ein Graubild und Vorschub-Korrelation erhalten wurden, erfolgen. Alternativ oder zusätzlich können Merkmale verwendet werden, die auf Höheninformation basieren, und/oder Merkmale, die auf einer Aufnahme aus verschiedenen Richtungen basieren. Ferner können alternativ oder zusätzlich Merkmale herangezogen werden, die auf einer Änderung der Polarisation basieren, und/oder Merkmale, die auf einer Detektion verschiedener Materialien basieren.

Wie oben erläutert wurde, kann die Merkmalsbestimmung in verschiedener Weise erfolgen, beispielsweise auf dem Sensor oder auf einer nachgelagerten Verarbeitungseinheit. Die Merkmalsbestimmung kann in Hardware oder in Software erfolgen, typischerweise aber mit vergleichsweise geringer Latenz, um eine rechtzeitige Auslösung einer Messausgabe oder einer weiteren, detaillierteren Auswertung der Bildinformation zu bewirken. Bei der Auswertung gewonnener Information können auch Ansteuerinformationen, beispielsweise für die weitere detailliertere Auswertung der Bildinformation durch eine Auswerteeinrichtung zur Bestimmung von Vermessungsergebnissen, genutzt werden. Außerdem kann wie die Auslöseeinrichtung auch ein Laserliniengenerator und/oder ein Beleuchtungssystem gesteuert werden.

Im Übrigen sei darauf hingewiesen, dass anhand der Fig. 1 das erläuterte Konzept durch alle Merkmale und Funktionalitäten ergänzt werden kann, die in dem vorliegenden Dokument beschrieben sind, und zwar einzeln oder in Kombination.

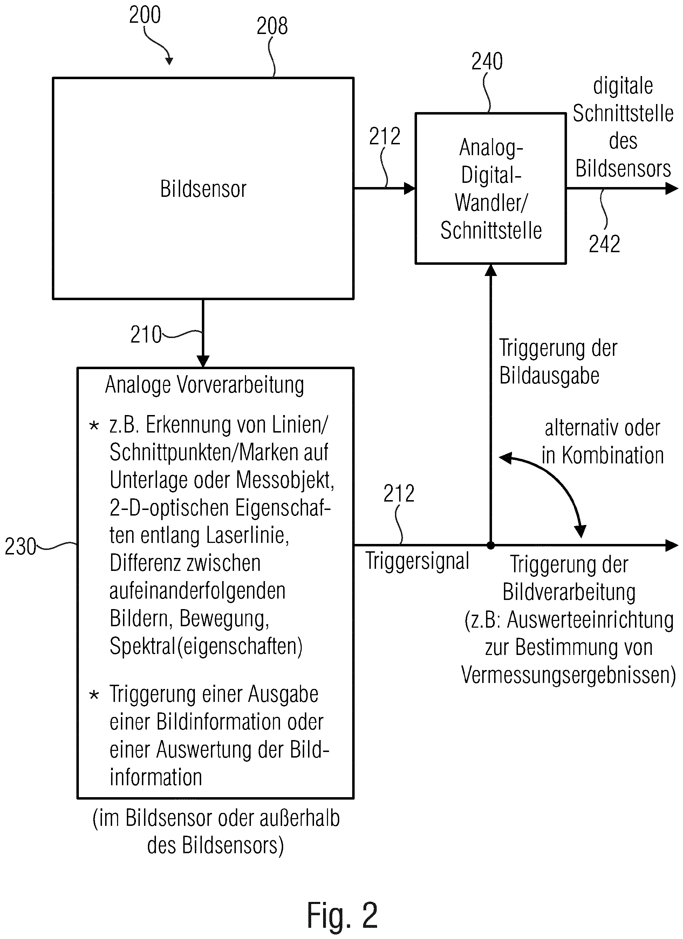

2. Vorrichtung zur 3-dimensionalen Vermessung eines Objekts gemäß Fig. 2

Fig. 2 zeigt eine schematische Darstellung einer Vorrichtung zur 3-dimensionalen Vermessung eines Objekts, gemäß einem weiteren Ausführungsbeispiel der vorliegenden Erfindung.

Die Vorrichtung gemäß der Fig. 2 ist in ihrer Gesamtheit mit 200 bezeichnet.

Die Vorrichtung 200 umfasst einen Bildsensor 208, der beispielsweise eine Bildinformation 210 und eine Bildinformation 212 liefern kann. Die Bildinformation 210 kann beispielsweise eine Darstellung einer Bildinformation in Form von analogen Bildsensorsignalen sein. Die Bildinformation 212 kann beispielsweise ebenfalls eine Darstellung in Form von analogen Signalen des Bildsensors sein.

Die Vorrichtung 200 umfasst ferner eine analoge Vorverarbeitung 230, die beispielsweise die Bildinformation 210 in Form von analogen Bildsensorsignalen empfängt. Die analoge Vorverarbeitung 230 kann beispielsweise die Funktion der Auslöseeinrichtung 130 gemäß Fig. 1 übernehmen. Die analoge Vorverarbeitung 230 kann beispielsweise ausgelegt sein, um Linien auf dem Trägerbauteil, das das zu vermessende Objekt trägt, oder auf dem zu vermessenden Objekt selbst, Schnittpunkte zwischen einer projizierten Linie und Linien auf dem Trägerbauteil oder auf dem zu vermessenden Objekt selbst und/oder Marken auf dem Trägerbauteil (Unterlage) oder auf dem zu vermessenden Objekt selbst (Messobjekt) und/oder 2-dimensionale optische Eigenschaften entlang einer projizierten Linie zu erkennen und gegebenenfalls Parameter zu bestimmen und auszugeben, die die erkannten Linien, Schnittpunkte, Marken oder optischen Eigenschaften beschreiben. Alternativ oder zusätzlich kann die analoge Vorverarbeitung ausgelegt sein, um eine Differenz zwischen aufeinanderfolgenden Bildern und/oder eine Bewegung des Objekts oder des Objektträgers zu erkennen und gegebenenfalls durch Parameter zu beschreiben. Die analoge Vorverarbeitung kann beispielsweise unmittelbar durch Hardware erfolgen und somit beispielsweise die analogen Bildsensorsignale ohne eine vorherige Digitalisierung auswerten. Am Ende der Auswertung kann beispielsweise eine Schwellwertentscheidung stehen, die eine Erkennung von Linien, Schnittpunkten, Marken, optischen Eigenschaften oder von Bewegungen signalisiert. Entsprechende Parameter, die die erkannten Linien, Schnittpunkte, Marken, optischen Eigenschaften oder Bewegungen beschreiben können, können dann beispielsweise auf digitalem Wege bestimmt werden, wobei allerdings bevorzugt von einer mehrstufigen Digitalisierung von Bildausschnitten oder von Gesamtbildern abgesehen wird.

Somit kann die analoge Vorverarbeitung 230 basierend auf der Erkennung von Linien, Schnittpunkten, Marken, optischen Eigenschaften, Differenzen zwischen aufeinanderfolgenden Bildern oder Bewegungen eine Auslösung (Triggerung) einer Ausgabe einer Bildinformation oder einer Auswertung der Bildinformation veranlassen. Zu diesem Zweck kann die analoge Vorverarbeitung 230 beispielsweise ein Triggersignal 220 erzeugen, das beispielsweise dem Auslösesignal 120 in der Vorrichtung 100 gemäß Fig. 1 entsprechen kann.

Das Auslösesignal bzw. Triggersignal 220 kann beispielsweise einer Ausgabeeinheit 240 zugeführt werden, die beispielsweise einen Analog-zu-Digital-Wandler und eine digitale Schnittstelle aufweist. Die Ausgabeeinheit 240 an beispielsweise die Bildinformation 212 von dem Bildsensor empfangen (beispielsweise in Form von analogen Bildsensorsignalen) und ansprechend auf das Auslösesignal 220 eine Analog-zu-Digital-Wandlung sowie eine Ausgabe der digitalisierten Bildinformation über die digitale Schnittstelle 242 auslösen.

Alternativ dazu kann das Auslösesignal bzw. Triggersignal 220 auch verwendet werden, um eine Bildverarbeitung (z.B. eine weitere, detailliertere Bildverarbeitung durch eine Auswerteeinrichtung zur Bestimmung von Vermessungsergebnissen) auszulösen. Diese weitere, detailliertere Bildverarbeitung, die beispielsweise eine Information über eine Form eines zu vermessenden Objekts entlang einer projizierten Ebene liefert, kann beispielsweise durch eine separate Auswerteeinrichtung erfolgen, die die Bildinformation über die digitale Schnittstelle 242 empfängt.

Durch eine Trennung der weiteren, detaillierteren Bildverarbeitung, die typischerweise basierend auf digitalisierten Bildinformationen erfolgt, von einer analogen Vorverarbeitung 230, die beispielsweise basierend auf analogen Bitsensorsignalen erfolgt, kann beispielsweise erreicht werden, dass die datenintensive Übertragung der Bildinformation über die Digitalschnittstelle 242 des Bildsensors nur dann erfolgen muss, wenn die sensornahe analoge Vorverarbeitung das Vorliegen einer Auslösebedingung erkennt (und durch das Auslösesignal 220 signalisiert). Da insbesondere die Erkennung der Auslösebedingung typischerweise einfacher ist als die Bestimmung eines Vermessungsergebnisses ist hier auch die Trennung der Auslösung von der Auswerteeinrichtung zur Bestimmung des Vermessungsergebnisses sinnvoll.

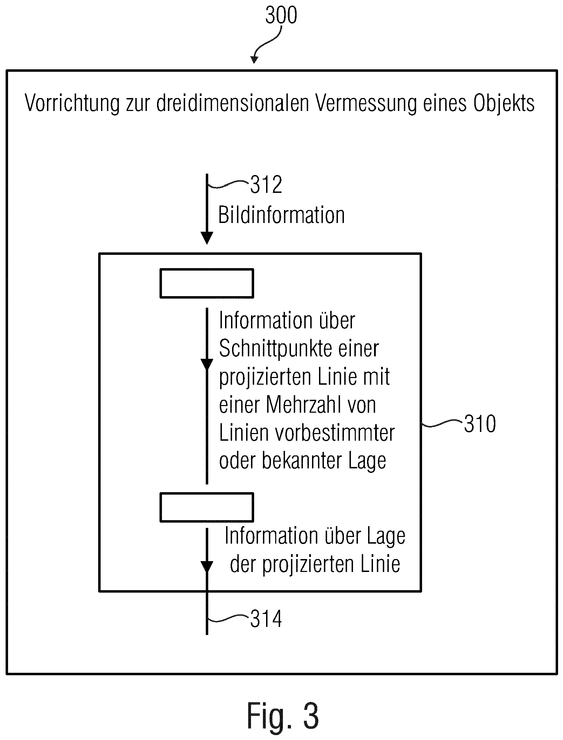

### 3. Vorrichtung zur 3-dimensionalen Vermessung eines Objekts gemäß Fig. 3

Fig. 3 zeigt eine schematische Darstellung einer Vorrichtung zur 3-dimensionalen Vermessung eines Objekts, gemäß einem Ausführungsbeispiel der vorliegenden Erfindung. Die Vorrichtung gemäß Fig. 3 ist in der Gesamtheit mit 300 bezeichnet. Die Vorrichtung zur 3-dimensionalen Vermessung des Objekts umfasst einen Positionsbestimmer 310. Der Positionsbestimmer 310 empfängt eine Bildinformation 312 und liefert basierend auf der Bildinformation 312 eine Information 314 über eine Lage der projizierten Linie. Der Positionsbestimmer 310 ist ausgelegt, um eine Bildinformation, die Schnittpunkte einer projizierten Linie mit einer Mehrzahl von Linien vorbestimmter oder bekannter Lage zeigt, zu empfangen, und um basierend auf der empfangenen Bildinformation eine Lage der projizierten Linie zu bestimmen. Die Lage der projizierten Linie kann beispielsweise durch die Information 314 dargestellt werden.

Der Positionsbestimmer ist somit ausgelegt, um basierend auf einer vergleichsweise einfachen Bildverarbeitung, bei der es im Wesentlichen um die Erkennung von Schnittpunkten der projizierten Linie mit einer Mehrzahl von Linien vor bestimmter oder bekannter Lage geht, Information über die Lage der projizierten Linie, beispielsweise relativ zu den Linien vorbestimmter oder bekannter Lage, bzw. relativ zu einem Ursprung eines Koordinatensystems, in dem die Lage der Mehrzahl von Linien vorbestimmter oder bekannter Lage bekannt ist, zu erhalten. Indem der Positionsbestimmer sich bei seiner Berechnung wesentlich auf die Lage der entsprechenden Schnittpunkte verlässt und diese beispielsweise anhand einer Bildverarbeitung bestimmt, ist es in sehr einfacher Weise möglich, die Lage der projizierten Linie zu bestimmen, ohne dass beispielsweise großer Aufwand bei der Bildverarbeitung betrieben werden müsste.

Die Vorrichtung 300 gemäß Fig. 3 basiert auf der Erkenntnis, dass die Schnittpunkte einer projizierten Linie mit einer Mehrzahl von Linien vorbestimmter oder bekannter Lage mit vergleichsweise geringem Aufwand in einer Bildinformation bestimmt werden können, und dass die Information über die Lage der Schnittpunkte dennoch in vielen Fällen einen eindeutigen und präzisen Rückschluss auf die Lage der projizierten Linie zulässt.

Weitere Details werden im Folgenden noch beschrieben. In anderen Worten, die Vorrichtung 300 gemäß Fig. 3 kann optional durch alle Merkmale und Funktionalitäten ergänzt werden, die hierin beschrieben sind. Es soll darauf hingewiesen werden, dass die hierin beschriebenen weiteren Merkmale und Funktionalitäten einzeln oder in Kombination in die Vorrichtung 300 gemäß der Fig. 3 aufgenommen werden können.

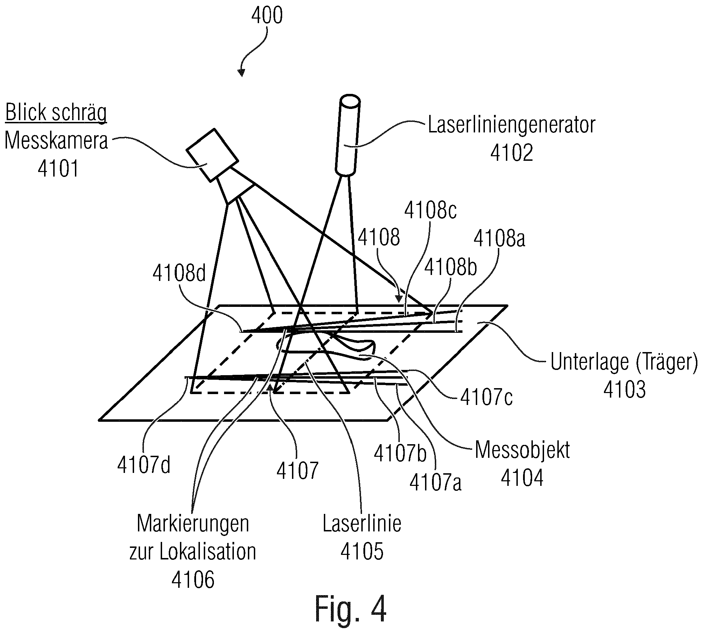

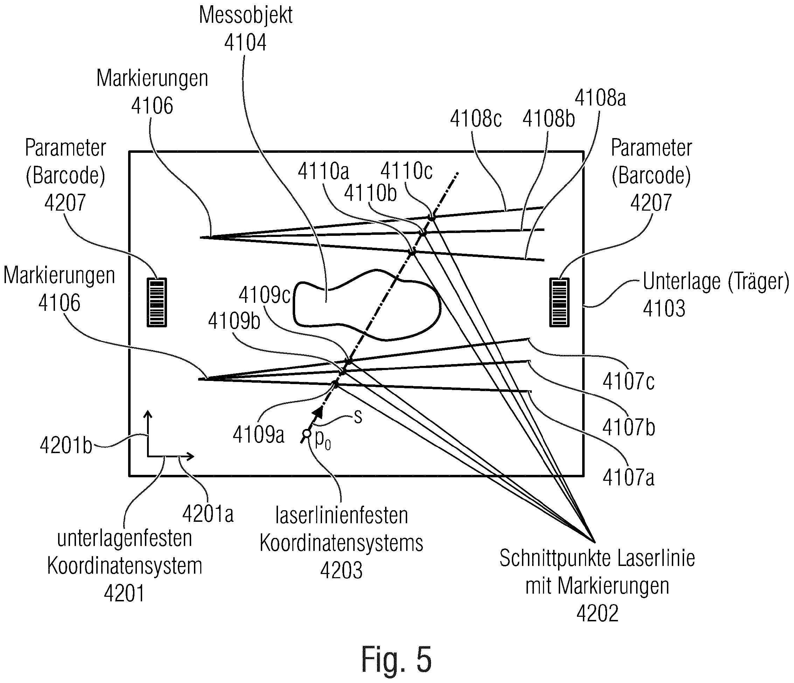

### 4. Vorrichtung gemäß den Fig. 4 und 5

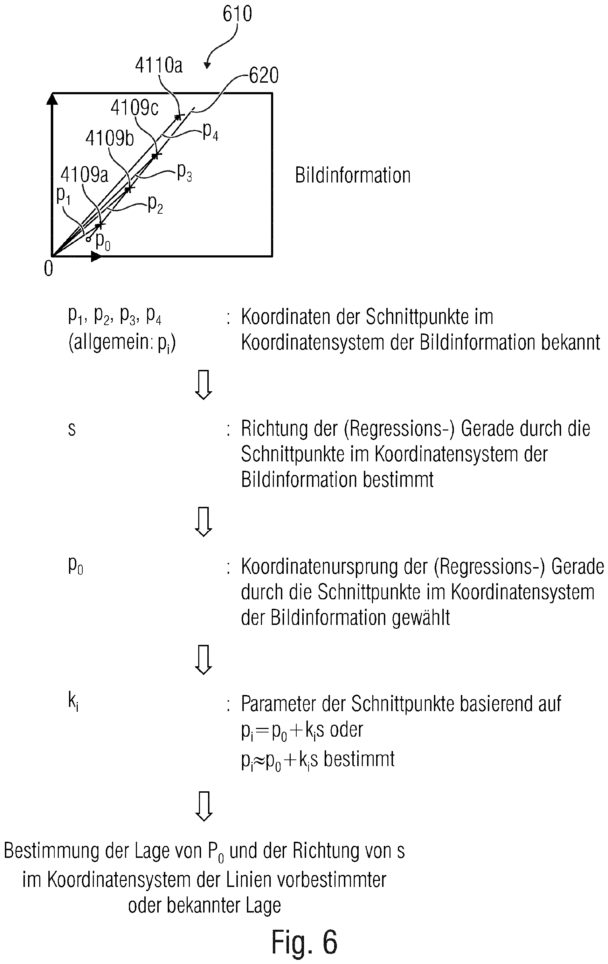

Im Folgenden wird eine Vorrichtung zur 3-dimensionalen Vermessung eines Objekts Bezug nehmend auf die Fig. 4 und 5 näher beschrieben. Ein Ablauf bei einer Bestimmung einer Lage der projizierten Linie wird dann auch noch anhand der Fig. 6 erläutert.

Fig. 4 zeigt, in Form eines Schrägbilds, eine schematische Darstellung einer Vorrichtung zur 3-dimensionalen Vermessung eines Objekts. Die Vorrichtung umfasst eine Messkamera 4101, die beispielsweise angeordnet bzw. ausgerichtet ist, um zumindest einen Teil einer Unterlage 4103, die auch als Träger bzw. Trägerbauteil bezeichnet werden kann, und bevorzugt auch zumindest einen Teil eines Messobjekts (beispielsweise eines zu vermessenden Objekts) aufzunehmen. Die Messkamera 4101 muss allerdings nicht stationär oder fest geführt angeordnet sein, sondern kann beispielsweise auch ausgelegt sein, um im Raum im Wesentlichen frei beweglich zu sein.

Die Vorrichtung 400 umfasst ferner einen Laserliniengenerator 4102, der beispielsweise ausgelegt bzw. angeordnet ist, um eine Laserlinie auf die Unterlage 4103 und bevorzugt auch auf das Messobjekt 4104 zu projizieren. Der Laserliniengenerator 4102 kann beispielsweise angeordnet sein, um einen bestimmten Winkelbereich in einer Ebene mit einem Laserstrahl abzutasten oder periodisch zu überstreichen und so beispielsweise bei ausreichender Wiederholfrequenz in einer Ebene einen vorgehenden Winkelbereich abzudecken. Während die durch den Laserliniengenerator 4102 erzeugten Laserlinien in klarer Luft mangels Streukörpern kaum erkennbar sind, erzeugt der Laserliniengenerator typischerweise eine sichtbare bzw. mit der Messkamera 4101 aufnehmbare "Laserlinie", wenn der Laserstrahl auf Objekte trifft. Die Laserlinie 4105 ist beispielsweise in einem Bereich, in dem der von den Laserliniengenerator 4102 erzeugte Laserstrahl auf die Unterlage 4103 trifft, im Wesentlichen gerade, wenn davon ausgegangen wird, dass die Unterlage 4103 im Wesentlichen eben ist. Sobald die Unterlage 4103 allerdings 3-dimensionale Strukturen aufweist, spiegeln sich diese naturgemäß - abhängig von einem Einfallswinkel des Laserstrahls - in Verformungen der Laserlinie 4105 wider. Dort, wo der Laserstrahl des Laserliniengenerators 4102 auf das zu vermessende Objekt 4104 trifft, folgt die Laserlinie der Kontur des zu vermessenden Objekts 4104 und ist somit bei einem üblichen, 3-dimensionalen und nicht flachen Messobjekt 4104 entsprechend deformiert bzw. gebogen.

Die Unterlage 4103 umfasst ferner eine Mehrzahl von Markierungen 4106 zur Lokalisation, die typischerweise (aber nicht notwendigerweise) durch gerade Linien gebildet werden. Wie in der Fig. 4 ersichtlich ist, gibt es beispielsweise einen ersten Satz 4107 von vorzugsweise geraden Linien, der eine erste Linie 4107a, eine zweite Linie 4107b und eine dritte Linie 4107c umfasst. Die erste Linie 4107a, die zweite Linie 4107b und die dritte Linie 4107c schneiden sich bevorzugt, aber nicht notwendigerweise, in einem ersten Schnittpunkt 4107d. Ferner existiert ein zweiter Satz 4108 von drei Linien 4108a, 4108b, 4108c, die beispielsweise gerade sind, und die beispielsweise durch einen gemeinsamen Punkt 4108d verlaufen. Diesbezüglich sei darauf hingewiesen, dass aber auch eine andere Anzahl an Linien bzw. eine andere Geometrie der Linien möglich ist.

Die Linien 4107a, 4107b, 4107c, 4108a, 4108b, 4108c können beispielsweise fest an der Unterlage 4103 angebracht sein. Die Linien können je nach Ausführungsform auf die Unterlage aufgemalt sein, oder die Linien können auch als 3-dimensionale Konturen auf der Unterlage aufgebracht sein. Bevorzugt sollten die Linien derart gestaltet sein, dass ein Schnittpunkt der Laserlinie 4105 mit den Linien 4107a, 4107b, 4107c, 4108a, 4108b, 4108c durch die Messkamera 4101 klar und deutlich erfasst werden kann. Beispielsweise können die Linien derart ausgeführt sein, dass die Schnittpunkte der Laserlinie 4105 mit den Linien 4107a, 4107b, 4107c, 4108a, 4108b, 4108c als besonders helle oder als besonders dunkle Stellen in einem durch die Messkamera 4101 aufgenommenen Bild erscheinen.

Im Hinblick auf die Lage und Anordnung der Linien sei darauf hingewiesen, dass diese vorzugsweise alle in einer Ebene liegen sollten, die einer Ebene der Unterlage 4103 entspricht. Vorzugsweise sind zumindest vier Linien vorhanden, wobei eine Aufteilung in zwei Sätze von Linien nicht erforderlich ist (aber bei manchen Ausführungsbeispielen zu einer Verbesserung der Genauigkeit beiträgt). Im Übrigen ist es auch nicht erforderlich, dass die Linien, oder eine Teilmenge der Linien, durch einen gemeinsamen Schnittpunkt geht. Allerdings hat sich gezeigt, dass es vorteilhaft ist, wenn nicht alle Linien zueinander parallel sind. Was die Lage der Linien anbelangt, so wird es bevorzugt, dass diese so angeordnet sind, dass ein im Folgenden noch beschriebenes Gleichungssystem eindeutig lösbar ist (wobei eine Überbestimmung des Gleichungssystems typischerweise unkritisch ist, da diese beispielsweise durch Verwendung eines Verfahrens zu einer Minimierung von Fehlerquadraten und somit zu einer Verbesserung der Genauigkeit herangezogen werden kann).

Im Folgenden wird die Anordnung gemäß der Fig. 4 noch einmal in einer Draufsicht erläutert. Fig. 5 zeigt eine solche Draufsicht auf die Anordnung 400, wobei einige weitere Details beschrieben werden. Es ist wiederum ersichtlich, dass die Unterlage 4103 vorhanden ist, die beispielsweise ein zu vermessendes Objekt 4104 trägt. Ebenso ist ersichtlich, dass eine Laserlinie 4105, die durch den Laserliniengenerator 4102 erzeugt wird, entlang der Oberfläche der Unterlage 4103 einen im Wesentlichen geraden Verlauf aufweist. Weiterhin sind die Markierungen 4106 ersichtlich, die beispielsweise sechs Linien 4107a, 4107b, 4107c, 4108a, 4108b, 4108c aufweisen. Weiterhin ist in der Fig. 5 ersichtlich, dass die Laserlinie 4105 sechs Schnittpunkte mit den sechs Linien 4107a-4108c aufweist. Die Schnittpunkte sind mit 4109a, 4109b, 4109c, 4110a, 4110b, 4110c bezeichnet.

Ferner sei darauf hingewiesen, dass der Unterlage 4103 beispielsweise eine unterlagenfestes Koordinatensystem 4201 zugeordnet sein kann. Das Koordinatensystem muss allerdings nicht explizit auf der Unterlage 4103 gezeigt sein. Das unterlagenfeste Koordinatensystem 4201 weist beispielsweise eine erste Koordinatenrichtung 4201a (z.B. x-Richtung) und eine zweite Koordinatenrichtung 4201b (z.B. y-Richtung) auf.

Im Übrigen sei darauf hingewiesen, dass die Lage der Linien 4107a, 4107b, 4107c, 4108a, 4108b und 4108c in dem unterlagenfesten Koordinatensystem 4201 bekannt sein sollte. Beispielsweise können die Linien durch Parameter $n_i$ und $r_i$ einer vektoriellen Koordinatengleichung $n_i^T x = r_i$ beschrieben werden, wobei zu der Linie dann alle Punkte mit Koordinatenvektor x gehören, die die genannte Koordinatengleichung erfüllen.

Somit ist beispielsweise für jede der Linien 4107a, 4107b, 4107c, 4108a, 4108b, 4108c ein jeweils zugeordneter Normalenvektor $n_i$ und ein jeweils zugeordneter skalarer Parameter $r_i$ bekannt. Die Linienparameter $n_i$, $r_i$ können beispielsweise Systemkonstanten sein. Die Linienparameter können aber auch beispielsweise unterschiedlichen Unterlagen 4103 unterschiedlich zugeordnet sein. Beispielsweise können die Linienparameter $n_i$, $r_i$ durch eine der Unterlage 4103 zugeordnete Informationsdarstellung beschrieben werden. Beispielsweise kann die Unterlage 4103 einen Streifencode (Barcode) 4207 aufweisen, der die Linienparameter $r_i$ und $n_i$ der auf der Unterlage 4103 vorhandenen Linien 4107a, 4107b, 4107c, 4108a, 4108b, 4108c beschreibt. Die Vorrichtung kann beispielsweise ausgelegt sein, um den Streifencode bzw. Barcode auf dem Träger 4103 auszulesen, um davon die Linienparameter $n_i$, $r_i$ abzuleiten.

Ferner sei darauf hingewiesen, dass auch ein laserlinienfestes Koordinatensystem 4203 definiert werden kann, das beispielsweise durch einen Koordinatenursprung $p_0$ und durch einen Richtungsvektor s definiert sein kann. Diesbezüglich sei darauf hingewiesen, dass der Koordinatenursprung $p_0$ und der Richtungsvektor s beispielsweise in dem unterlagenfesten Koordinatensystem 4201 bestimmt werden können. Die Lage des laserlinienfesten Koordinatensystems 4203 im Hinblick auf das unterlagenfesten Koordinatensystem 4201 ist aber typischerweise ursprünglich (vor Auswertung des unten erläuterten Gleichungssystems) unbekannt, so dass $p_0$ und s zunächst als Unbekannte anzusehen sind.

Zusammenfassend ist somit festzuhalten, dass die Fig. 4 einen Aufbau zur Lokalisation einer Laserlinie im Bezug zu einem Messobjekt mittels Markierungen auf der Unterlage (Träger) zeigt.

Die Lokalisation kann anhand von Fig. 4 (auch anhand von Fig. 5) genauer erläutert werden. Die Lokalisation der Laserlinie im Koordinatensystem (z.B. im unterlagenfesten Koordinatensystem 4201) kann dadurch erfolgen, dass das Messobjekt fest mit einem Träger verbunden ist oder auf ihm aufliegt, wobei der Träger und/oder das Messobjekt eine oder mehrere geeignete Markierungen enthalten. Der Träger (und/oder das Messobjekt) wird nun mit einer (beispielsweise von dem Laserliniengenerator 4102 erzeugten) Laserlinie angeleuchtet, die wiederum von einer Messkamera (beispielsweise von der Messkamera 4101) beobachtet wird.

Es erfolgt bevorzugt eine Vorgabe der geometrischen Parameter der Markierungen, beispielsweise manuell oder maschinenlesbar (z.B. mittels Barcode bzw. Streifencode 4207). In anderen Worten, eine Information über die Lage der (Markierungs-)Linien 4107a, 4107b, 4107c, 4108a, 4108b, 4108c kann manuell in die Vorrichtung (oder den Positionsbestimmer) eingegeben werden, oder die Information über die Lage der (Markierungs-) Linien kann durch die Vorrichtung (oder den Positionsbestimmer) elektronisch eingelesen werden, z.B. durch eine Erkennung der in dem Streifencode (Barcode) enthaltenen Informationen.

Das Konzept umfasst ferner eine Abtastung der Markierungen (z.B. der Markierungslinien). Beispielsweise kann eine Abtastung der Seitenmarkierungen 4106 für eine genaue Lokalisation der LL-Linie (z.B. der Laserlinie 4105) in Relation zu der Unterlage 4103 erfolgen. Ferner erfolgt bevorzugt auch eine Abtastung des dazwischen (z.B. zwischen der ersten Gruppe 4107 von Linien und der zweiten Gruppe 4108 von Linien) befindlichen Messobjekts 4104. Hierbei ist Eindeutigkeit vorteilhaft. Sofern Eindeutigkeit herrscht, besteht die Möglichkeit der Zuordnung von Winkel und Verschiebung der Laserlinie in Bezug auf die Markierungen.

In anderen Worten, die Linien 4107a, 4107b, 4107c, 4108a, 4108b, 4108c sind bevorzugt so angeordnet, dass das Messobjekt 4104 zwischen zumindest zwei der Linien liegt (bzw. liegen kann), bevorzugt ohne irgendeine Linie gegenüber dem Laserliniengenerator 4102 oder gegenüber der Messkamera 4101 abzuschatten. Weiterhin sind die Linien bevorzugt so angeordnet, dass aus den Schnittpunkten 4109a-4109c, 4110a-4110c zwischen der projizierten Linie (Laserlinie) und den Linien 4107a-4107c, 4108a-4108c eindeutig auf die Lage der Laserlinie 4105 relativ zu den Linien 4107a-4107c, 4108a-4108c bzw. relativ zu dem unterlagenfesten Koordinatensystem 4201 geschlossen werden kann. Zu diesem Zweck sind die Linien beispielsweise bevorzugt so zu wählen, dass das im Folgenden beschriebene Gleichungssystem nicht unterbestimmt ist.

Im Folgenden werden Details im Hinblick auf die Bestimmung der Lage der Laserlinie bezogen auf die Unterlage mit den Markierungen beschrieben. Diesbezüglich wird unter andrem auf die Fig. 5 und 6 Bezug genommen.

Fig. 6 zeigt eine schematische Darstellung einer Bildinformation, wie sie beispielsweise von der Messkamera 4101 aufgenommen wird, sowie einer anschließenden Bildverarbeitung durch einen Positionsbestimmer gemäß einem Ausführungsbeispiel der Erfindung.

Die Bildinformation 610, wie sie von der Messkamera 4101 aufgenommen wird, erlaubt beispielsweise die Identifizierung von Schnittpunkten der Laserlinie mit Markierungen auf der Unterlage 4103. Beispielsweise sind ein erster Schnittpunkt 4109a, ein zweiter Schnittpunkt 4109b, ein dritter Schnittpunkt 4109c und ein vierter Schnittpunkt 4110a ersichtlich. Diese Schnittpunkte zwischen der Laserlinie und den Linien 4107a, 4107b, 4107c, 4108a auf der Unterlage 4103 können beispielsweise durch eine einfache Bildverarbeitung (des Positionsbestimmers) erkannt werden, wenn die Schnittpunkte beispielsweise als besonders helle Punkte in der von der Messkamera 4101 gelieferten Bildinformation vorliegen. Alternativ dazu können die Schnittpunkte 4109a, 4109b, 4109c, 4110a beispielsweise auch als besonders dunkle Stellen entlang der Laserlinie oder als besonders breite oder enge Stellen entlang der Laserlinie in der von der Messkamera 4101 gelieferten Bildinformation identifizierbar sein, je nachdem mit welcher Technologie die Linien 4107a, 4107b, 4107c, usw. auf der Unterlage markiert sind. Wichtig ist hier lediglich, dass die Abbilder der Schnittpunkte 4109a, 4109b, 4109c, 4110a in der von der Messkamera gelieferten Bildinformation mit möglichst geringem Aufwand identifizierbar sind.

Somit sind beispielsweise durch eine vergleichsweise einfache Bildauswertung die Koordinaten der Abbilder der Schnittpunkte 4109a, 4109b, 4109c, 4110a in der Bildinformation bestimmbar. Beispielsweise können die Schnittpunkte durch 2-dimensionale Koordinaten beschrieben werden, beispielsweise durch eine x-Koordinate und eine y-Koordinate (beispielsweise in einem Bild-Koordinatensystem).

Somit kann basierend auf der von der Messkamera gelieferten Bildinformation (durch den Positionsbestimmer) eine Regressionsgerade identifiziert werden, die durch die Abbilder der Schnittpunkte 4109a, 4109b, 4109c, 4110a verläuft bzw. die so verläuft, dass eine Summe von Abstandsquadraten der Abbilder der Schnittpunkte 4109a-4110a von der Regressionsgerade minimiert wird. Die Regressionsgerade ist beispielsweise mit 620 bezeichnet. Diesbezüglich sei darauf hingewiesen, dass aber nicht notwendigerweise eine echte Regressionsgerade bestimmt werden muss. Vielmehr kann jedwede Methode zur Identifizierung einer Gerade, die zumindest näherungsweise durch die Abbilder der Schnittpunkte verläuft, herangezogen werden.

Eine Richtung der Regressionsgerade kann beispielsweise durch einen Vektor s beschrieben werden, bei dem es sich beispielsweise um einen Einheitsvektor handelt. Ferner kann in einem Koordinatensystem der Bildinformation ein Koordinatenursprung auf der Regressionsgerade durch die Schnittpunkte gewählt werden. Die Wahl des Koordinatenursprungs ist dabei im Wesentlichen beliebig. Der Koordinatenursprung sollte allerdings auf der Regressionsgeraden 620 liegen. Eine Wahl des Koordinatenursprungs ist mit $p_0$ angedeutet. Basierend auf der Wahl des Koordinatenursprungs $p_0$ (die durch den Positionsbestimmer erfolgen kann) werden nunmehr durch den Positionsbestimmer Parameter $k_i$ ermittelt, die die Lage der Schnittpunkte 4109a, 4109b, 4109c, 4110a (auch durch Vektoren $p_1$, $p_2$, $p_3$, $p_4$ beschrieben) charakterisieren, bzw. die der Lage der Schnittpunkte zugeordnet sind. Beispielsweise können die Parameter $k_i$ im Wesentlichen eine Entfernung der Schnittpunkte von dem (auf der Regressionsgerade gewählten) Koordinatenursprung beschreiben, wobei ein Vorzeichen der Parameter $k_i$ angeben kann, in welcher Richtung, von dem Koordinatenursprung der Regressionsgerade aus gesehen, der jeweilige Schnittpunkt liegt. Genauer gesagt, die Beträge der Parameter $k_i$ können somit die Entfernung der Schnittpunkte von dem Koordinatenursprung beschreiben. Beispielsweise können die Parameter $k_i$ so gewählt werden, dass die Gleichungen $p_i = p_0 + k_i s$ bestmöglich erfüllt sind (z.B. im Sinne eines kleinstmöglichen Fehlers, falls die jeweiligen Schnittpunkte nicht genau auf der (Regressions-) Geraden liegen).

Zusammenfassend ist somit festzuhalten, dass der Positionsbestimmer eine Bildinformation auswertet, und dabei zunächst eine Lage von Schnittpunkten ermittelt. Der Positionsbestimmer ermittelt dann eine Gerade oder Regressionsgerade durch die Schnittpunkte und bestimmt einen Richtungsvektor der Geraden oder Regressionsgeraden. Der Positionsbestimmer wählt dann, beispielsweise willkürlich oder basierend auf einer vorgegebenen Regel, einen Punkt auf der Gerade oder Regressionsgerade als Koordinatenursprung eines "laserlinienfesten Koordinatensystems" 4203. Anschließend bestimmt der Positionsbestimmer die Parameter $k_i$, beispielsweise basierend auf der oben genannten vektoriellen Gleichung.

Anschließend bestimmt der Positionsbestimmer eine Lage von $p_0$ (also des Koordinatenursprungs des laserlinienfesten Koordinatensystems) und eine Richtung s (also eine Richtung des laserlinienfesten Koordinatensystems) in dem Koordinatensystem der Linien vorbestimmter oder bekannter Lage (also in dem unterlagenfesten Koordinatensystem 4201).

Die Bestimmung der Lage von $p_0$ und von s im Koordinatensystem der Linien vorbestimmter oder bekannter Lage wird unten noch anhand eines Gleichungssystems näher erläutert.

Im Folgenden werden weitere Details im Hinblick auf die Bestimmung der Lage der Laserlinie bezogen auf die Unterlage mit den Markierungen erläutert. Die im Folgenden beschriebenen Konzepte können für sich genommen oder in Verbindung mit den weiteren hierin beschriebenen Aspekten eingesetzt werden.

Fig. 5 zeigt diesbezüglich eine Anordnung sowie die Auswertung von Markierungen auf der Unterlage. Ein wichtiger Aspekt der Erfindung (insbesondere der Positionsbestimmung) bezieht sich auf die Bestimmung von Kreuzungspunkten zwischen der Laserlinie (bzw. der projizierten Linie) 4105 und Markierungen 106. Hierzu sei insbesondere auf die Fig. 5 Bezug genommen.

Die Bestimmung von Kreuzungspunkten (auch als Schnittpunkte bezeichnet) ermöglicht eine Ermittlung der Verschiebung und Rotation der Laserlinie 4105 in Bezug auf die Unterlage 4102. Hierdurch wird bei bewegtem Scan die Ausgabe eines Profils (beispielsweise des zu vermessenden Objekts) bei definierter (oder bestimmter) Änderung der Position der Laserlinie ermöglicht. Beispielsweise ist die Ausgabe eines Laserlinienprofils gemeinsam mit Positionsparametern möglich. So können beispielsweise Anfangs- und Endpunkte der Laserlinie im Koordinatensystem der Unterlage (bzw. des Messobjekts) ausgegeben werden, selbst wenn die genaue Lage des Laserliniengenerators 4102 relativ zu der Unterlage 4103 nicht aufgrund einer mechanischen Führung festgelegt oder bestimmbar ist. Somit kann beispielsweise durch den Positionsbestimmer eine Ausgabe von Verschiebung und Rotation der beiden Koordinatensysteme (also des laserlinienfesten Koordinatensystems 4203 und des unterlagenfesten Koordinatensystems 4201) zueinander erfolgen. Beispielsweise kann durch den Positionsbestimmer auch eine Ausgabe der Schnittpunkte zwischen der Laserlinie und den Markierungen zur gemeinsamen Auswertung mit einem Höhenprofil (das durch eine weitergehende Bildauswertung erzielbar ist und das beispielsweise ein Profil des Messobjekts beschreibt) erfolgen.

Im Folgenden werden weitere Details im Hinblick auf den Lokalisationsalgorithmus beschrieben, die beispielsweise für sich genommen oder in Verbindung mit den anhand der Fig. 6 gemachten Ausführungen verwendet werden können.

Die Lage der Laserlinie 4105 wird relativ zu einem unterlagenfesten Koordinatensystem 4201 bestimmt, indem der Koordinatenursprung $p_0$ und ein Einheitsvektor s eines laserlinienfesten Koordinatensystems 4203 berechnet wird. Dazu sind die Markierungen 4106 (beispielsweise die Linien 4107a, 4107b, 4107c, 4108a, 4108b, 4108c) vorzugsweise wenigstens vier auf der Unterlage 4103 aufgebrachte Geraden, die wenigstens vier geeignete Schnittpunkte 4202, 4109a, 4109b, 4109c, 4110a, 4110b, 4110c mit der Laserlinie 4105 auf der Unterlage bilden. Mindestens vier der besagten Schnittpunkte 4202, 4109a, 4109b, 4109c, 4110a, 4110b, 4110c werden entlang der Laserlinie 4105 detektiert (beispielsweise durch den Positionsbestimmer in einem von der Messkamera 4101 gelieferten Abbild) und in dem laserlinienfesten Koordinatensystem 4203 verortet und in der Form $p_i = p_0 + k_i s$ dargestellt $(i \in \mathbb{N}, \forall i : k_i \in \mathbb{R})$. Beispielsweise können zu diesem Zweck als Hilfsgrößen $p_0$ in einem Koordinatensystem der Bildinformation und s in einem Koordinatensystem der Bildinformation bestimmt werden (wobei bevorzugt davon ausgegangen wird, dass die Bildinformation ein im Wesentlichen unverzerrtes Abbild der Unterlage 4103 bzw. der Schnittpunkte zwischen der Laserlinie 4105 und den Markierungen 4202 zeigt). Im Übrigen kann beispielsweise die Parameter $k_i$ durch den Positionsbestimmer ermittelt und für die weitere Berechnung bereitgehalten werden. In dem unterlagenfesten Koordinatensystem 4201 seien die diesen Schnittpunkten zugeordneten Markierungsgeraden 4106 (z.B. Geraden 4107a, 4107b, 4107c, 4108a, 4108b, 4108c) durch eine Gleichung der Form $n_i^T p = r_i$ beschrieben $(i \in \mathbb{N})$, wobei die Konstanten $n_i$ und $r_i$ beispielsweise manuell (in dem Positionsbestimmer oder in die übergeordnete Vorrichtung) eingegeben oder anhand von Parametern oder Streifencodes (Barcodes) 4107 ermittelt werden.

Vorzugsweise werden der Koordinatenursprung $p_0$ und der Einheitsvektor s (beispielsweise in dem unterlagenfesten Koordinatensystem 4201) als Lösung bzw. als Kleinste-Quadrate-Lösung (oder Kleinste-Fehlerquadrate-Lösung) des linearen Gleichungssystems

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix}$$

ermittelt, wobei vorzugsweise N >4 Geraden 4106 und Schnittpunkte 4202 verwendet werden (überbestimmtes Gleichungssystem). Allerdings kann auch eine Verwendung von N=4 Geraden und Schnittpunkten in manchen Ausführungsbeispielen ausreichend sein.

Optional wird das Gleichungssystem nur für eine Teilmenge der Schnittpunkte 4202 der Laserlinie 4105 und der Markierung 4106 gelöst. Optional wird jede Teilmenge so gewählt, dass nur Schnittpunkte 4202 benutzt werden, die nicht durch das Messobjekt 4104 verdeckt sind. Optional wird besagte Teilmenge so gewählt, dass nur Schnittpunkte benutzt werden, die im Bild der Messkamera 4105 sichtbar sind. Optional wird für jeden im Bild der Messkammer 4101 sichtbaren Schnittpunkt eine Detektionsgenauigkeit geschätzt und diese Detektionsgenauigkeit bei der Auswahl besagter Teilmenge berücksichtigt.

Optional werden neben der Kleinste-Quadrate-Lösung des besagten Gleichungssystems auch die Residuen bestimmt. Optional werden diese Residuen benutzt, um Plausibilitätsüberprüfungen durchzuführen. Optional werden die Residuen benutzt, um zu entscheiden, ob ein Bild der Messkamera 4101 verworfen wird (oder nicht).

Gemäß einem Aspekt der Erfindung kann eine Auswertung des Höhenprofils gemeinsam mit den Lokalisationsdaten erfolgen. Beispielsweise kann (z.B. durch den Positionsbestimmer) eine Bestimmung einer exakten Lage der Laserlinie 4105 in Bezug auf die Unterlage bzw. in Bezug auf das Messobjekt erfolgen. Ferner wird somit eine Durchführung einer Koordinatentransformation der Höhendaten (die z.B. basierend auf einem Laser-Lichtschnitt des zu vermessenden Messobjekts 4104 erhalten wird) in das Koordinatensystem der Markierungen bzw. der Unterlage des Messobjekts ermöglicht. Diese Koordinatentransformation kann z.B. durch die Vorrichtung zur Vermessung eines 3-dimensionalen Objekts basierend auf der von dem Positionsbestimmer erhaltenen Information über die Lage der projizierten Linie durchgeführt werden, wobei beispielsweise ein Höhenprofil, das durch eine weitergehende Auswertung der Bildinformation von der Messkamera 4104 erhalten wird, gemäß der Information über die Lage der projizierten Linie einer korrekten Position bzw. einem korrekten Verlauf zugeordnet wird. Gegebenenfalls kann eine Interpolation fehlender Punkte im Rahmen der Auswertung des Höhenprofils gemeinsam mit den Lokalisationsdaten erfolgen. Optional kann ein mehrfaches Überstreichen der Oberfläche mit dem Sensoraufbau zur Abtastung/Abrasterung der Oberfläche sinnvoll sein. Beispielsweise können der Laserliniengenerators 4102 und/oder die Messkamera 4101 mehrfach (z.B. manuell, oder auch durch eine mechanische Führungseinrichtung) an dem zu vermessenden Objekt vorbeigeführt werden, wobei während des Vorbeiführens des Laserliniengenerators 4102 und/oder der Messkamera 4101 zu verschiedenen Zeitpunkten die Position der Laserlinie 4105 bestimmt werden kann. Somit können beispielsweise Höhenprofile, die verschiedenen Lagen der Laserlinie 4105 zugeordnet sind, zu einem Gesamt-Höhenprofil des zu vermessenden Objekts zusammengesetzt werden, wobei durch mehrfaches Vorbeiführen des Laserliniengenerators 4102 und/oder der Messkamera 4101 an dem zu vermessenden Objekt die Anzahl von einzelnen Höhenprofilen erhöht wird, was wiederum zu einer verbesserten Auflösung eines Gesamt-Höhenprofils führen kann.

Zusammenfassend ist somit festzuhalten, dass mit dem anhand der Fig. 4, 5 und 6 beschriebenen Konzept eine verbesserte 3-dimensionale Vermessung eines Objekts möglich wird. So kann durch den hierin beschriebenen Positionsbestimmer eine Bildinformation (z.B. von der Messkamera 4101) verwendet werden, um eine Lage der z.B. durch den Laserliniengenerators 4102 projizierten Linie relativ zu einem unterlagenfesten Koordinatensystem 4201 zu bestimmen, wobei keine mechanischen Positionssensoren mehr nötig sind. Die Bestimmung der Position der Laserlinie 4105 erfolgt vielmehr lediglich aufgrund einer Erkennung von Schnittpunkten zwischen der Laserlinie 4105 und Markierungen 4202 und basiert auf einer Verarbeitung von Informationen, die die Position der Schnittpunkte in einem idealerweise unverzerrten Bild der Unterlage 4103 beschreiben. Bei der Verarbeitung sollte bevorzugt die Lage der Markierungen bzw. Linien 4106, 4107a, 4107b, 4107c, 4108a, 4108b, 4108c bekannt sein, wobei der Positionsbestimmer die Informationen beispielsweise uber eine Benutzerschnittstelle oder über eine Auswertung einer optisch oder elektronisch codierten Lageinformation erhalten kann.

Information über die Lage der Laserlinie 4105, die durch den Positionsbestimmer erhalten wird, kann dann in verschiedener Weise verwendet werden. Einerseits kann die Information über die Lage der Laserlinie 4105 beispielsweise verwendet werden, um eine Messausgabe oder eine weitere, detailliertere Auswertung einer Bildinformation (beispielsweise zur Bestimmung eines Höhenprofils entlang eines Laser-Lichtschnitts) auszulösen. Alternativ oder zusätzlich kann die Information über die Lage der Laserlinie 4105 auch verwendet werden, um einem durch eine weitere detailliertere Auswertung der beispielsweise von der Messkamera erhaltenen Bildinformation erhaltenen Höhenprofil eine Positionsinformation zuzuordnen. Ist nämlich beispielsweise die Lage der Laserlinie 4105 in dem unterlagenfesten Koordinatensystem 4201 bekannt, so kann daraus gefolgert werden, wo ein Laser-Lichtschnitt ein zu vermessendes Objekt 4104 schneidet. Somit kann basierend auf der Information über die Lage der Laserlinie 4105 (bzw. allgemein der projizierten Linie) bestimmt werden, wo innerhalb eines Modells des zu vermessenden Objekts 4104 ein durch einen Laser-Lichtschnitt erhaltenes Höhenprofil anzusetzen ist.

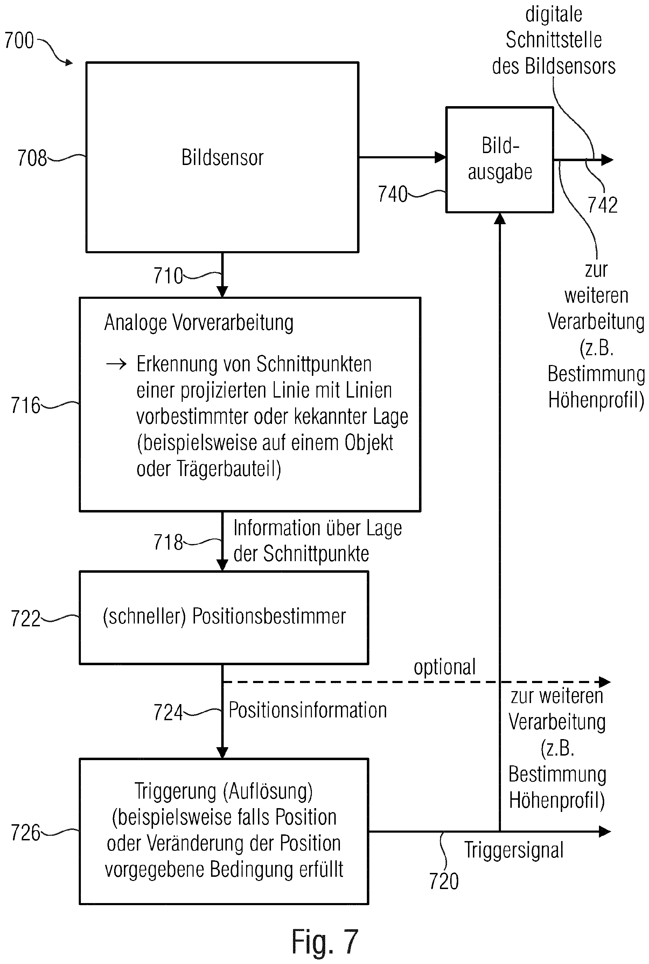

## 5. Vorrichtung gemäß Fig. 7

Fig. 7 zeigt ein Blockschaltbild einer Vorrichtung zur 3-dimensionalen Vermessung eines Objekts, gemäß einem Ausführungsbeispiel der vorliegenden Erfindung. Die Vorrichtung gemäß der Fig. 7 ist in ihrer Gesamtheit mit 700 bezeichnet. Die Vorrichtung 700 umfasst einen Bildsensor 708, der beispielsweise dem oben erläuterten Bildsensor 208 entsprechen kann. Der Bildsensor liefert beispielsweise ein analoges Bildsensorsignal 710, das beispielsweise dem analogen Bildsensorsignal 210 entsprechen kann, und das beispielsweise auch der Bildinformation 312 entsprechen kann. Die Vorrichtung 700 umfasst ferner eine analoge Vorverarbeitung 716, die beispielsweise ausgelegt sein kann, um Schnittpunkte einer projizierten Linie mit Linien vorbestimmter oder bekannter Lage, beispielsweise auf einem Objekt oder einem Trägerbauteil, zu erkennen und eine Information 718 über eine Lage der Schnittpunkte innerhalb der Bildinformation zu liefern. Die Vorrichtung 700 umfasst ferner einen (schnellen) Positionsbestimmer 722, der beispielsweise ausgelegt ist, um basierend auf der Information 718 über die Lage der Schnittpunkte in der Bildinformation eine Positionsinformation 724 zu liefern, die beispielsweise eine Lage der projizierten Linie in Bezug auf ein Trägerbauteil (Unterlage) oder in Bezug auf ein Objekt beschreibt. Die analoge Vorverarbeitung 716 und der (schnelle) Positionsbestimmer 722 können beispielsweise zusammen die Funktion des Positionsbestimmers 310 erfüllen. Die Vorrichtung 700 umfasst ferner eine Triggerung 726, die beispielsweise ausgelegt ist, um ein Triggersignal 720 zu erzeugen, wenn erkannt wird, dass die projizierten Linie eine bestimmte Lage aufweist (wobei die Lage der projizierten Linie durch die Positionsinformation 724 beschrieben wird). Das Triggersignal 720 kann hierbei beispielsweise dem Triggersignal 220 entsprechen.

Insgesamt ist somit festzuhalten, dass die analoge Vorverarbeitung 716, der Positionsbestimmer 722 und die Triggerung 726 zusammen die Funktion der analogen Vorverarbeitung 230 erfüllen kann, also ein Triggersignal 720 erzeugen kann, das eine Messausgabe oder eine weitere, detailliertere Verarbeitung einer Bildinformation auslöst.

Die Vorrichtung 700 umfasst hier beispielsweise noch eine Bildausgabe 740, die beispielsweise dem Analog-Digital-Wandler/Schnittstelle 240 der Vorrichtung 200 entsprechen kann. Beispielsweise kann durch das Auslösesignal bzw. Triggersignal 720 eine Ausgabe einer Bildinformation für eine weitere Verarbeitung, beispielsweise für eine Bestimmung eines Höhenprofils, ausgegeben werden.

Ergänzend sei darauf hingewiesen, dass Details der weiteren Verarbeitung hier nicht gezeigt sind. Die weitere Verarbeitung, die beispielsweise durch das Triggersignal 720 ausgelöst wird, oder die beispielsweise durch die Ausgabe einer Bildinformation über die digitale Schnittstelle 742 ausgelöst wird, kann beispielsweise anhand der über die digitale Schnittstelle 742 gelieferten Bildinformation von dem Bildsensor 708 ein Höhenprofil (z.B. entlang der Laserlinie bzw. entlang des Laser-Lichtschnitts) erzeugen. Beispielsweise kann die weitere Verarbeitung auch eine Lage des Höhenprofils basierend auf der Positionsinformation 724, die optional auch an die weitere Verarbeitung weitergeleitet werden kann, bestimmen.

Somit kann die Vorrichtung 700 in ihrer Gesamtheit eine weitere Verarbeitung (z.B. eine Bestimmung eines Höhenprofils entlang einer Laserlinie oder entlang eines Laser-Lichtschnitts) auslösen, wenn durch eine analoge Vorverarbeitung 716, die beispielsweise auf analogen Bildsensorsignalen basiert, Schnittpunkte einer projizierten Linie mit Linien vorbestimmter oder bekannter Lage erkannt werden, und wenn beispielsweise eine aus diesen Schnittpunkten abgeleitete Positionsinformation 724 anzeigt, dass die projizierten Linien (Laserlinie) sich an einer Position befindet, an der ein Höhenprofil erstellt werden soll.

Die Bestimmung eines Höhenprofils, oder eine sonstige weitere Verarbeitung, die der 3-dimensionalen Vermessung eines Objekts dient, kann beispielsweise durch das Auslösesignal bzw. Trägersignal 720 ausgelöst werden, oder kann beispielsweise einfach durch die Ausgabe einer digitalen Bildinformation über die digitale Schnittstelle 242 des Bildsensors ausgelöst werden (wobei diese Ausgabe einer Bildinformation wiederum über das Auslösesignal 720 ausgelöst wird).

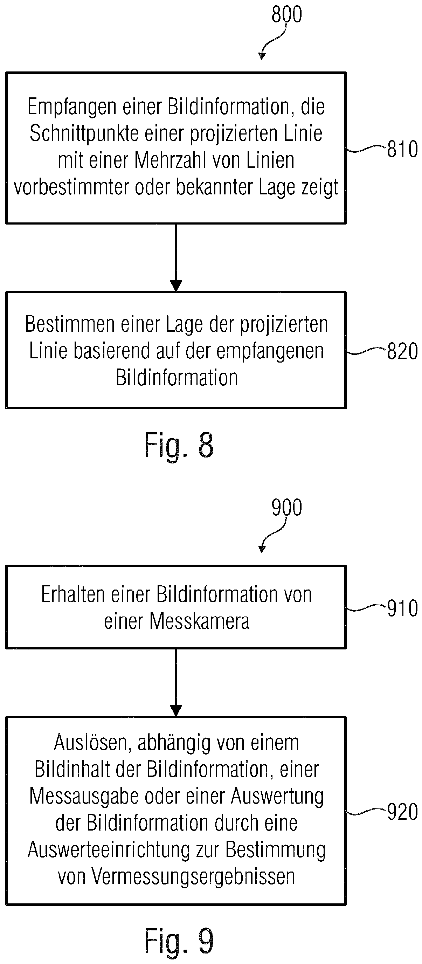

### 6. Verfahren gemäß Fig. 8

Fig. 8 zeigt ein Flussdiagramm eines Verfahrens zur 3-dimensionalen Vermessung eines Objekts. Das Verfahren 800 umfasst ein Empfangen 810 einer Bildinformation, die Schnittpunkte einer projizierten Linie mit einer Mehrzahl von Linien in vorbestimmter und bekannter Lage zeigt, sowie ein Bestimmen 820 einer Lage der projizierten Linie basierend auf der empfangenen Bildinformation.

Das Verfahren 800 kann um alle Schritte, Merkmale und Funktionalitäten ergänzt werden, die hierin beschrieben sind, und zwar einzeln oder in Kombination.

### 7. Verfahren gemäß Fig. 9

Fig. 9 zeigt ein Flussdiagramm eines Verfahrens zur 3-dimensionalen Vermessung eines Objekts. Das Verfahren 900 gemäß Fig. 9 umfasst ein Erhalten 910 einer Bildinformation von einer Messkamera und ein Auslösen 920, abhängig von einem Bildinhalt der Bildinformation, einer Messausgabe oder einer Auswertung der Bildinformation durch eine Auswerteeinrichtung zur Bestimmung von Vermessungsergebnissen.

Das Verfahren 900 gemäß Fig. 9 kann um alle Schritte, Merkmale und Funktionalitäten ergänzt werden, die hierin beschrieben wurden und zwar einzeln oder in Kombination.

### 8. Anwendungen

Im Folgenden werden verschiedene mögliche Anwendungen von Ausführungsbeispielen gemäß der vorliegenden Erfindung beschrieben.

Ausführungsbeispiele gemäß der vorliegenden Erfindung können beispielsweise für eine ungekoppelte oder manuelle Aufnahme von 3-dimensionalen Daten (3D-Daten) bei besonderen Aufbauten verwendet werden. Die Anwendung kann beispielsweise bei unbeweglichen Objekten erfolgen, oder auch bei Objekten, die kein Abscannen mittels Inkrementalgeber (oder keine Bewegung auf einem Trägerbauteil, dessen Bewegung durch Inkrementalgeber erfasst werden kann) ermöglichen. Dies kann beispielsweise ermöglicht werden durch Aufbringen geeigneter Markierungen (z.B. der Markierungen 4202) zur Kennzeichnung der Lage im Koordinatensystem der Unterlage (z.B. im unterlagenfesten Koordinatensystem 4201) bzw. des Messsystems.

Eine Triggerung (z.B. eine Triggerung basierend auf einer Bildinformation) kann beispielsweise verwendet werden zum Abtasten bzw. Abscannen von Objekten im Außenraum.

Ausführungsbeispiele gemäß der Erfindung können auch zur Vermessung von Schienen und Straßen verwendet werden.

Ausführungsbeispiele gemäß der Erfindung können auch zur Erkennung und Vermessung von Fehlstellen oder besonderen Bereichen (z.B. von zu vermessenden Objekten) verwendet werden. Beispielsweise kann eine automatische hochpräzise Vermessung erfolgen, so lange ein Bereich im Bildfeld ist.

Diesbezüglich sei darauf hingewiesen, dass beispielsweise an einer Oberfläche eines zu erfassenden bzw. zu vermessenden Bereichs oder in einer Nachbarschaft eines zu erfassenden oder zu vermessenden Bereichs Markierungen 202 angebracht werden können, die dann beim Scannen des zu erfassenden Bereichs einen Rückschluss auf eine Lage einer projizierten Linie ermöglichen.

Wenn beispielsweise ein bestimmter Bereich einer Mauer (oder eines sonstigen Gebäudeteils) erfasst werden soll, so können beispielsweise in einer Umgebung des zu erfassenden Bereichs entsprechende Markierungen (z.B. Linien oder linienförmige Markierungen) angebracht werden, wobei anhand der Schnittpunkte der projizierten Linie (Laserlinie) mit den Markierungen dann auf die Lage der projizierten Linie (Laserlinie) zurückgeschlossen werden wird. Somit kann ein Laserscanner, der die Laserlinie erzeugt, relativ frei geführt werden, und es kann trotzdem stets ermittelt werden, wo die projizierten Linie im Hinblick auf die zu vermessende Oberfläche verläuft.

Im Übrigen kann die auf einer typischerweise einfachen Bildauswertung basierende Auslösung der Messausgabe oder der weiteren Verarbeitung die Möglichkeit eröffnen, Höhenprofile auch dann zu erstellen, wenn eine exakte relative Führung (beispielsweise mit einer bekannten Relativbewegung zwischen Laserliniengenerator und zu vermessenden Objekt) nicht sichergestellt werden kann oder wenn es unmöglich oder zu aufwendig ist, eine solche Relativbewegung durch mechanische Sensoren zu erfassen.

Ausführungsbeispiele gemäß der Erfindung ermöglichen somit eine beliebige Positionierung einer Laserlinie (oder einer projizierten Linie) über einem Messobjekt, was ein freihändiges Scannern erlaubt.

Ausführungsbeispiele gemäß der Erfindung erlauben auch eine Unabhängigkeit von Positionsgebern.

Ausführungsbeispiele gemäß der Erfindung ermöglichen somit eine optimale Auflösung je nach Scanaufgabe (Abtastaufgabe) und Oberfläche/Struktur des Messobjekts.

9. Weitere Aspekte

Im Folgenden werden weitere Aspekte gemäß der Erfindung beschrieben, die einzeln oder in Kombination mit den anderen hier dargestellten Aspekten verwendet werden können.

Ausführungsbeispiele gemäß der Erfindung können oder mehrere der folgenden Aufgabenstellungen ganz oder teilweise lösen:

• beliebige Positionierung der Laserlinie über Messobjekt - freihändisches Scannen

• Unabhängkeit von Positionsgebern

• Optimale Auflösung je nach Scanaufgabe und Oberfläche/Struktur des Messobjekts

9.1 Lösungsideen (unabhängig voneinander oder kombiniert einsetzbar)

9.1.1 Triggerung

Die erfindungsgemäße Lösung zur Triggerung der Bildaufnahme unterscheidet sich von Stand der Technik dadurch, dass keine elektrische Kopplung zwischen Vortrieb des Messobjekts und Messsystem z.B. durch Inkrementalgeber oder Timer für ein festes Zeitintervall besteht. Die Auslösug einer Messausgabe von der Messkamera erfolgt ausschließlich durch den Bildinhalt. Dies bedeutet, dass das Messsystem permanent eine Bildanalyse auf der Grundlage geeigneter Merkmale durchführt und nur bei Erfüllung bestimmter vordefinierter Kriterien eine Bildausgabe erfolgt also von außen betrachtet ein selbstgetriggertes Messergebnis ausgibt.

Dabei können folgende Merkmale zur Detektion einer Aufnahme gewählt werden:

• Laserlichtschnitt

  ◦ 3D Marken auf der Oberfläche der Unterlage, auf der sich das Messobjekt befindet; und/oder

  ◦ 2D optische Eigenschaften entlang der Laserlinie

    ▪ Veränderung der Reflektanz; und/oder

    ▪ Veränderung der Volumenstreuung; und/oder

    ▪ farbliche Aufdrucken; und/oder

  ◦ allgemeine Merkmale aus der Verarbeitungskette innerhalb der Messkamera

    ▪ Zuverlässigkeit der detektierten Linie; und/oder

    ▪ Lokale Breite der Laserlinie; und/oder

• Graubild und Vorschub-Korrelation

  ◦ mit oder ohne flächige Beleuchtung;und/oder

  ◦ optische Merkmale über einen größeren Bereich innerhalb oder außerhalb der beleuchteten Laserlinie; und/oder

  ◦ Ausnutzung der 3D Stereo-Rekonstruktion auch zur Bewegungsschätzung; und/oder

  « Vergleich von Grauwert-Merkmalen in Vorschubrichtung z.B. mittels Korrelation; und/oder

  ◦ Detektion von Marken und farblichen Ausdrücken; und/oder

• Höheninformationen - Risse / Spalten / Kratzer
  ◦ Beschreibung von Rissen und Spalten z.B. durch fehlende Reflexionen mit bestimmter örtlicher Ausdehnung; und/oder

• Aufnahme aus verschiedenen Richtungen

  ◦ Bei Aufnahme mit mehreren Kameras oder mehreren Laserliniengeneratoren aus / in verschiedenen Richtungen

  ◦ Unterschiede in den detektierten Eigenschaften aus verschiedenen Richtungen; und/oder

- Änderung der Polarisation

  ◦ Detektion verschiedener Materialien

  ◦ Erkennung der Variation der Eindringtiefe des Laserstrahls

9.1.2 Merkmalsbestimmung (einige oder alle Konzepte können genutzt werden

- Analyse der in 9.1.1 dargestellten Eigenschaften auf dem Sensor oder der nachgelagerten Verarbeitungseinheit

- Bildverarbeitung mittels Software oder speziell dazu entwickelten HardwareBlöcken

- Sofortige Bestimmung der Ergebnisse ohne oder mit sehr geringer Latenz

- Auswertung zur Entscheidung ob Ergebnisse ausgegeben werden oder die Ausgabe unterdrückt wird

- Auswertung verschiedener Merkmale auf dem Sensorfeld an verschiedenen Regions-of-Interesst

- Nutzung der detektierten Eigenschaften zur Entscheidung der Lage der untersuchten Regions of Interest

- Steuerung der Merkmalsbestimmung durch externe digitale Schnittstelle für synchrone oder asynchrone Parameter anhand derer die Triggerung entschieden wird.

- direkte Ausgabe von Steuersignalen für die Laserliniengeneratoren und Beleuchtungssysteme zur Umtastung der Beleuchtung

9.1.3 Lokalisation

9.1.3.1 Allgemein

Die Lokalisation soll anhand von Figur 4 genauer erläutert werden. Figur 4 zeigt einen Aufbau zur Lokalisation einer Laserlinie in Bezug zu einem Messobjekt mittels Markierungen auf der Unterlage (Träger). Die Lokalisation der Laserlinie im Koordinatensystem kann dadurch erfolgen, dass das Messobjekt fest mit einem Träger verbunden ist oder auf ihm aufliegt, dass eine oder mehrere geeignete Markierungen enthält. Wird es nun mit einer Laserlinie angeleuchtet, die wiederum von einer Messkamera beobachtet wird.

- Vorgabe der geometrischen Parameter der Markierungen

  ◦ manuell; und/oder

  ◦ maschinenlesbar z.B. mittels Barcode (107)

- Abtastung der Markierungen

  ◦ Seitenmarkierungen 106 für genaue Lokalisation der LL-Linie in Relation zur Unterlage und/oder

  ◦ des sich dazwischen befindlichen Messobjekts

  ◦ Eindeutigkeit ist vorteilhaft - Möglichkeit der Zuordnung von Winkel und Verschiebung der Laserlinie in Bezug auf die Makierungen

9.1.3.2 Bestimmung der Lage der Laserlinie bezogen auf die Unterlage mit den Markierungen

Es wird Bezug genommen auf Fig 5. Fig. 5 zeigt eine Anordnung und Auswertung von Markierungen auf der Unterlage.

Die Bestimmung der Lage der Laserlinie umfasst:

- Bestimmung von Kreuzungspunkten zwischen Laserlinie und Markierungen, siehe Fig. 5

  o Ermittlung der Verschiebung und Rotation der Laserlinie in Bezug auf die Unterlage

  ◦ bei bewegtem Scannen Ausgabe eines Profils bei definierter Änderung der Position der Laserlinie

  ◦ Ausgabe des Laserliniernprofils gemeinsam mit Positionsparametern

    ▪ z.B. Anfangs und Endpunkte der Laserlinie im Koordinatensystem der Unterlage (des Messobjekts)

    ▪ Ausgabe von Verschiebung und Rotation der beiden Koordinatensysteme zueinander

    ▪ Ausgabe der Schnittpunkte zwischen Laserlinie und und Markierungen zur gemeinsamen Auswertung mit dem Höhenprofil

- Lokalisationsalgorithmus
  Die Lage der Laserlinie (105) wird relativ zu einem unterlagenfesten Koordinatensystem (201) bestimmt, indem der Koordinatenursprung $p_0$ und ein

Einheitsvektor s eines laserlinienfesten Koordinatensystems (203) berechnet wird: Dazu sind die Markierungen (106) vorzugsweise wenigstens vier auf der Unterlage (103) aufgebrachte Geraden, die wenigstens vier geeignete Schnittpunkte (202) mit der Laserlinie (105) auf der Unterlage bilden. Mindestens vier der besagten Schnittpunkte (202) werden entlang der Laserlinie (105) detektiert und in dem laserlinienfesten Koordinatensystem (203) verortet und in der Form $p_i = p_0 + k_i s$ dargestellt $(i \in \mathbb{N},$ $\forall i : k_i \in \mathbb{R}).$ In dem unterlagenfesten Koordinatensystem (201) seien die diesen Schnittpunkten zugeordneten Markierungsgeraden (106) durch eine Gleichung der Form $n_i^T p = r_i$ beschrieben $(i \in \mathbb{N}),$ wobei die Konstanten $n_i$ und $r_i$ manuell eingegeben oder anhand der Parameter/Barcodes (107) ermittelt werden. Vorzugsweise werden der Koordinatenursprung $p_0$ und der Einheitsvektor $s$ als Lösung bzw. als Kleinste-Quadrate-Lösung des linearen Gleichungssystems

$$
\begin{bmatrix}
n_1^T & k_1 n_1^T \\
\vdots & \vdots \\
n_i^T & k_i n_i^T \\
\vdots & \vdots \\
n_N^T & k_N n_N^T
\end{bmatrix}
\begin{bmatrix}
p_0 \\
s
\end{bmatrix}
=
\begin{bmatrix}
r_1 \\
\vdots \\
r_i \\
\vdots \\
r_N
\end{bmatrix}
$$

ermittelt, wobei vorzugsweise $N > 4$ Geraden (106) und Schnittpunkte (202) verwendet werden (Überbestimmtes Gleichungssystem).

Optional wird das Gleichungssystem nur für eine Teilmenge der Schnittpunkte (202) der Laserlinie (105) und der Markierungen (106) gelöst. Optional wird diese Teilmenge so gewählt, dass nur Schnittpunkte (202) benutzt werden, die nicht durch das Messobjekt (104) verdeckt sind. Optional wird besagte Teilmenge so gewählt, dass nur Schnittpunkte benutzt werden, die im Bild der Messkamera (101) sichtbar sind. Optional wird für jeden im Bild der Messkamera (101) sichtbaren Schnittpunkt eine Detektionsgenauigkeit geschätzt und diese Detektionsgenauigkeit bei der Auswahl von besagter Teilmenge berücksichtigt.

Optional werden neben der kleinste-Quadrate-Lösung des besagten Gleichungssystems auch die Residuen bestimmt. Optional werden diese Residuen benutzt, um Plausibilitätsüberprüfungen durchzuführen. Optional werden die Residuen benutzt, um zu entscheiden ob ein Bild der Messkamera (101) verworfen wird.

- Auswertung des Höhenprofils gemeinsam mit dem Lokalisationsdaten

  ◦ Bestimmung der exakten Lage der Laserlinie in Bezug auf die Unterlage bzw. das Messobjekt
  ◦ Durchführung einer Koordinatentransformation der Höhendaten in das Koordinatensystem der Markierungen bzw. der Unterlage und des Messobjektes
  ◦ gegebenenfalls Interpolation fehlender Punkte
  ◦ Mehrfaches Überstreichen der Oberfläche mit dem Sensoraufbau zur Abtastung/Abrasterung der Oberfläche

9.1.4 Anwendungen (als Alternativen oder kombinierbar)

- Ungekoppelte oder manuelle Aufnahme von 3D-Daten bei besonderen Aufbauten

  ◦ unbeweglichen Objekten

  ◦ Objekten, die kein Abscannen mittels Inkrementalgeber ermöglichen
  ▪ Aufbringen geeigneter Markierungen zur Kennzeichnung der Lage im Koordinatensystem der Unterlage bzw. des Messsystems

- Triggerung: Abscannen von Objekten im Außenraum

- Vermessung von Schienen oder Straßen

- Erkennung und Vermessung von Fehlstellen oder besonderen Bereichen
  ◦ automatische hochpräzise Vermessung, so lange Bereich im Bildfeld

10. Implementierungsalternativen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (300; 400; 500;700) zur dreidimensionalen Vermessung eines Objekts (4104), mit folgenden Merkmalen:

   einem Positionsbestimmer (310; 716,722), der ausgelegt ist, um eine Bildinformation (312; 710), die Schnittpunkte (4109a,4109b,4109c,4110a,4110b,4110c) einer Linie (4105), deren Lage zu bestimmen ist, mit einer Mehrzahl von zumindest drei Linien (4106, 4107a,4107b,4107c, 4108a,4108b,4108c) vorbestimmter oder bekannter Lage, die an oder auf einem Trägerbauteil, das ausgelegt ist, um das Messobjekt zu tragen, angeordnet sind, und die in einer Ebene liegen und die nicht alle parallel zueinander sind, zeigt, von einer Kamera zu empfangen und um basierend auf der empfangenen Bildinformation eine Lage der Linie (4105) zu bestimmen;
   wobei der Positionsbestimmer (310; 716,722) ausgelegt ist, um einen Koordinatenursprung ($p_0$) eines Koordinatensystems, das der Linie (4105), deren Lage zu bestimmen ist, zugeordnet ist, und einen Einheitsabschnitt (s) des Koordinatensystems, das der Linie, deren Lage zu bestimmen ist, zugeordnet ist, zu definieren, und um eine Mehrzahl von Parametern ($k_i$) zu bestimmen, die Schnittpunkte (4109a,4109b,4109c,4110a,4110b,4110c) zwischen der Linie (4105), deren Lage zu bestimmen ist, und den Linien (4106, 4107a,4107b,4107c,4108a,4108b,4108c) der Mehrzahl von Linien vorbestimmter oder bekannter Lage beschreiben;
   wobei der Positionsbestimmer (310; 716,722) ausgelegt ist, um die Parameter ($k_i$) so zu bestimmen, dass die Parameter, oder Beträge der Parameter, Abstände der Schnittpunkte von dem Koordinatenursprung ($p_0$) des Koordinatensystems, das der Linie (4105), deren Lage zu bestimmen ist, zugeordnet ist, beschreiben;
   wobei der Positionsbestimmer (310; 716,722) ausgelegt ist, um eine Lage des Koordinatenursprungs ($p_0$) des Koordinatensystems, das der Linie (4105), deren Lage zu bestimmen ist, zugeordnet ist, in einem Koordinatensystem (4201), das einem Trägerbauteil (4103), das die Linien (4106, 4107a,4107b,4107c,4108a,4108b,4108c) vorbestimmter oder bekannter Lage trägt oder bezüglich dessen die Linien vorbestimmter oder bekannter Lage ortsfest abgebildet werden, zugeordnet ist, zu bestimmen.

2. Vorrichtung gemäß Anspruch 1, wobei der Positionsbestimmer (310; 716,722) ausgelegt ist, um Konstanten $n_i$, $r_i$ zu erhalten, die die Linien (4106, 4107a,4107b,4107c,4108a,4108b,4108c) vorbestimmter oder bekannter Lage in einem Koordinatensystem in der Form $n_i^T p = r_i$ beschreiben.

3. Vorrichtung gemäß einem der Ansprüche 1 bis 2, wobei der Positionsbestimmer (310; 716,722) ausgelegt ist, um eine Information über die Lage der Linien (4106, 4107a,4107b,4107c,4108a,4108b,4108c) vorbestimmter oder bekannter Lage unter Verwendung einer in einem eindimensionalen oder zweidimensionalen optischen Code (4207) enthaltenen Information zu bestimmen.

4. Vorrichtung gemäß einem der Ansprüche 1 bis 3, wobei der Positionsbestimmer (310; 716,722) ausgelegt ist, um Parameter $k_i$ zu bestimmen, die Schnittpunkte $p_i$ einer Linie (4105), deren Lage zu bestimmen ist, mit den Linien vorbestimmter oder bekannter Lage in einem zu der Linie, deren Lage zu bestimmen ist, zugeordneten Koordinatensystem in der Form $p_i = p_0 + k_i s$ beschreiben.

5. Vorrichtung gemäß einem der Ansprüche 1 bis 4, wobei der Positionsbestimmer (310; 716,722) ausgelegt ist, um ein Gleichungssystem zu lösen, das Geradengleichungen der Linien (4106, 4107a,4107b,4107c,4108a,4108b,4108c) vorbestimmter oder bekannter Lage und eine Darstellung der Koordinaten der Schnittpunkte in einem der Linie (4105), deren Lage zu bestimmen ist, zugeordneten Koordinatensystem ($p_0$,s) kombiniert, um ein eine Information über eine Lages eines Koordinatenursprungs ($p_0$) des der Linie, deren Lage zu bestimmen ist, zugeordneten Koordinatensystems und eine Information über eine Orientierung (s) des der Linie, deren Lage zu bestimmen ist, zugeordneten Koordinatensystems zu erhalten.

6. Vorrichtung gemäß einem der Ansprüche 1 bis 5, wobei der Positionsbestimmer (310; 716,722) ausgelegt ist, um ein Gleichungssystem der Form

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix}$$

exakt oder näherungsweise zu lösen, um die Parameter $p_0$ und $s$, die die Lage der Linie, deren Lage zu bestimmen ist, beschreiben, zu bestimmen; wobei $n_1$ bis $n_N$ Vektoren normal zu den Linien (4106, 4107a,4107b,4107c,4108a,4108b,4108c) vorbestimmter oder bekannter Lage in einem im Hinblick auf die Linien vorbestimmter oder bekannter Linie festen Koordinatensystem sind, wobei $r_1$ bis $r_N$ skalare Werte sind, die einen Abstand der Linien (4106, 4107a,4107b,4107c,4108a,4108b,4108c) vorbestimmter oder bekannter Lage von einem Koordinatenursprung des im Hinblick auf die Linien vorbestimmter oder bekannter Lage festen Koordinatensystem beschreiben, oder deren Beträge einen Abstand der Linien (4106, 4107a,4107b,4107c,4108a,4108b,4108c) vorbestimmter oder bekannter Lage von einem Koordinatenursprung des im Hinblick auf die Linien vorbestimmter oder bekannter Lage festen Koordinatensystem beschreiben, wobei $p_0$ eine Lage eines Ursprungs eines der Linie (4105), deren Lage zu bestimmen ist, zugeordneten Koordinatensystems in Koordinaten des im Hinblick auf die Linien vorbestimmter oder bekannter Lage festen Koordinatensystems ist, wobei $s$ eine Richtung eines Einheitsabschnitts des der Linie (4105), deren Lage zu bestimmen ist, zugeordneten Koordinatensystems in Koordinaten des im Hinblick auf die Linien vorbestimmter oder bekannter Lage festen Koordinatensystems ist, und wobei $k_1$ bis $k_N$ Abstände der Schnittpunkte (4109a,4109b,4109c,4110a,411b,4110c) von einem Ursprung (p0) des der Linie, deren Lage zu bestimmen ist, zugeordneten Koordinatensystems beschreiben.

7. Vorrichtung gemäß einem der Ansprüche 1 bis 6, wobei die Vorrichtung ein Trägerbauteil (4103) aufweist, das ausgelegt ist, um ein Messobjekt (4104) zu tragen, und das eine Mehrzahl von Linien (4106, 4107a,4107b,4107c,4108a,4108b,4108c) vorbestimmter oder bekannter Lage zur Verwendung durch den Positionsbestimmer aufweist.

8. Vorrichtung gemäß Anspruch 7, wobei das Trägerbauteil (4103) zumindest vier Linien (4106, 4107a,4107b,4107c,4108a,4108b,4108c) vorbestimmter oder bekannter Lage aufweist.

9. Vorrichtung gemäß Anspruch 7 oder 8, wobei die Linien (4106, 4107a,4107b,4107c,4108a,4108b,4108c) vorbestimmter oder bekannter Lage paarweise einen Winkel von zumindest 2 Grad einschließen, oder wobei eine Teilmenge der Linien vorbestimmter oder bekannter Lage paarweise einen Winkel von zumindest zwei Grad einschließen.

10. Vorrichtung gemäß einem der Ansprüche 1 bis 9, wobei der Positionsbestimmer (310; 716,722) ausgelegt ist, um die Funktion einer Auslöseeinrichtung (130;230) zu erfüllen, wobei der Positionsbestimmer ausgelegt ist, um eine Bildinformation (312; 710) von einer Messkamera zu erhalten und um abhängig von einem Bildinhalt der Bildinformation eine Weiterleitung der Bildinformation an eine Auswerteeinrichtung zur Bestimmung von Vermessungsergebnissen oder eine Auswertung der Bildinformation durch eine Auswerteeinrichtung zur Bestimmung von Vermessungsergebnissen des Objekts auszulösen.

11. Vorrichtung gemäß Anspruch 10, wobei der Positionsbestimmer (310; 716,722) ausgelegt ist, um zu erkennen, wenn der Bildinhalt sich gegenüber einem Referenz-Bildinhalt um zumindest eine vorgegebene Verschiebung verschoben hat, und um abhängig von der Erkennung einer Verschiebung die Weiterleitung der Bildinformation oder die Auswertung der Bildinformation durch die Auswerteeinrichtung zur Bestimmung von Vermessungsergebnissen auszulösen.

12. Vorrichtung gemäß einem der Ansprüche 10 bis 11, wobei der Positionsbestimmer (310; 716,722) ausgelegt ist, um basierend auf dem Bildinhalt eine Bewegung einer Kamera (4101), die die Bildinformation erzeugt, und/oder eine Verschiebung einer Lichtquelle (4102), die das Messobjekt bestrahlt, und/oder eine Bewegung des Messobjekts, zu bestimmen oder abzuschätzen, und wobei der Positionsbestimmer ausgelegt ist, um abhängig von der Bestimmung oder Abschätzung der Verschiebung die Weiterleitung der Bildinformation oder die Auswertung der Bildinformation durch die Auswerteeinrichtung zur Bestimmung von Vermessungsergebnissen auszulösen.

13. Vorrichtung gemäß einem der Ansprüche 10 bis 12, wobei der Positionsbestimmer (310; 716,722) ausgelegt ist, um bei der Analyse des Bildinhalts eine 3-dimensionale Rekonstruktion zur Bewegungsschätzung auszunutzen, und/oder einen Vergleich von Grauwert-Merkmalen in einer Vorschubrichtung durchzuführen, und/oder Marken zu detektieren, und/oder farbliche Ausdrücke zu detektieren.

14. Vorrichtung gemäß einem der Ansprüche 1 bis 13,

wobei die Vorrichtung eine Kamera (4101; 708) zur Bereitstellung der Bildinformation (312;710) aufweist.

15. Verfahren (800) zur dreidimensionalen Vermessung eines Objekts, mit folgenden Schritten:

Empfangen (810) einer Bildinformation, die Schnittpunkte einer Linie, deren Lage zu bestimmen ist, mit einer Mehrzahl von zumindest drei Linien vorbestimmter oder bekannter Lage, die an oder auf einem Trägerbauteil, das ausgelegt ist, um das Messobjekt zu tragen, angeordnet sind oder die bezüglich des Trägerbauteils ortsfest abgebildet sind, und die in einer Ebene liegen und die nicht alle parallel zueinander sind, zeigt, von einer Kamera, und
Bestimmen (820) einer Lage der Linie, deren Lage zu bestimmen ist, basierend auf der empfangenen Bildinformation;
wobei das Verfahren ein Definieren eines Koordinatenursprungs ($p_0$) eines Koordinatensystems, das der Linie (4105), deren Lage zu bestimmen ist, zugeordnet ist, und eines Einheitsabschnitts (s) des Koordinatensystems, das der Linie, deren Lage zu bestimmen ist, zugeordnet ist, und
ein Bestimmen einer Mehrzahl von Parametern ($k_i$), die Schnittpunkte (4109a,4109b,4109c,4110a,4110b,4110c) zwischen der Linie (4105), deren Lage zu bestimmen ist, und den Linien (4106, 4107a,4107b,4107c,4108a,4108b,4108c) der Mehrzahl von Linien vorbestimmter oder bekannter Lage beschreiben, umfasst;
wobei die Parameter ($k_i$) so bestimmt werden, dass die Parameter, oder Beträge der Parameter, Abstände der Schnittpunkte von dem Koordinatenursprung ($p_0$) des Koordinatensystems, das der Linie (4105), deren Lage zu bestimmen ist, zugeordnet ist, beschreiben;
wobei das Verfahren ein Bestimmen einer Lage des Koordinatenursprungs ($p_0$) des Koordinatensystems, das der Linie (4105), deren Lage zu bestimmen ist, zugeordnet ist, in einem Koordinatensystem (4201), das einem Trägerbauteil (4103), das die Linien (4106, 4107a,4107b,4107c,4108a,4108b,4108c) vorbestimmter oder bekannter Lage trägt oder bezüglich dessen die Linien vorbestimmter oder bekannter Lage ortsfest abgebildet werden, zugeordnet ist, umfasst.

16. Computerprogramm ausgelegt zur Durchführung des Verfahrens gemäß Anspruch 15, wenn das Computerprogramm auf einem Computer durchgeführt wird.

**Claims**

1. Apparatus (300; 400; 500; 700) for three-dimensional measurement of an object (4104), comprising:

a positioning unit (310; 716; 722) that is configured to receive, from a camera, image information (312; 710) showing intersections (4109a, 4109b, 4109c, 4110a, 4110b, 4110c) of a line (4105) whose position is to be determined with a plurality of at least three lines (4106, 4107a, 4107b, 4107c, 4108a, 4108b, 4108c) of predetermined or known position that are arranged at or on a carrier member that is configured to carry the measurement object and that lie in one plane and that are not all parallel to one another, and to determine a position of the line (4105) based on the received image information;
wherein the positioning unit (310; 716, 722) is configured to define a coordinate origin ($p_0$) of a coordinate system allocated to the line (4105) whose position is to be determined and a unit section (s) of the coordinate system allocated to the line whose position is to be determined and to determine a plurality of parameters ($k_i$) that describe intersections (4109a, 4109b, 4109c, 4110a, 4110b, 4110c) between the line (4105) whose position is to be determined and the lines (4106, 4107a, 4107b, 4107c, 4108a, 4108b, 4108c) of the plurality of lines of predetermined or known position;
wherein the positioning unit (310; 716, 722) is configured to determine the parameters ($k_i$) such that the parameters or amounts of the parameters describe distances of the intersections from the coordinate origin ($p_0$) of the coordinate system allocated to the line (4105) whose position is to be determined;
wherein the positioning unit (310; 716, 722) is configured to determine a position of the coordinate origin ($p_0$) of the coordinate system allocated to the line (4105) whose position is to be determined in a coordinate system (4201) allocated to a carrier member (4103) carrying the lines (4106, 4107a, 4107b, 4107c, 4108a, 4108b, 4108c) of predetermined or known position or with respect to which the lines of predetermined or known position are imaged in a stationary manner.

2. Apparatus according to claim 1, wherein the positioning unit (310; 716, 722) is configured to obtain constants $n_i$, $r_i$ that describe the lines (4106, 4107a, 4107b, 4107c, 4108a, 4108b, 4108c) of predetermined or known position in a coordinate system in the form $n_i^T p = r_i$.

3. Apparatus according to one of claims 1 to 2, wherein the positioning unit (310; 716, 722) is configured to determine information on the position of the lines (4106, 4107a, 4107b, 4107c, 4108a, 4108b, 4108c) of predetermined or known position by using information included in a one-dimensional or two-dimensional optical code (4207).

4. Apparatus according to one of claims 1 to 3, wherein the positioning unit (310; 716, 722) is configured to determine parameters $k_i$ that describe intersections $p_i$ of a (4105) whose position is to be determined with the lines of predetermined or known position in a coordinate system allocated to the line whose position is to be determined in the form $p_i = p_0 + k_i s$.

5. Apparatus according to one of claims 1 to 4, wherein the positioning unit (310; 716, 722) is configured to solve a system of equations that combines straight-line equations of the lines (4106, 4107a, 4107b, 4107c, 4108a, 4108b, 4108c) of predetermined or known position and a representation of the coordinates of the intersections in a coordinate system $(p_0, s)$ allocated to the line (4105) whose position is to be determined in order to obtain information on a position of a coordinate origin $(p_0)$ of the coordinate system allocated to the line whose position is to be determined and information on an orientation $(s)$ of the coordinate system allocated to the line whose position is to be determined.

6. Apparatus according to one of claims 1 to 5, wherein the positioning unit (310; 716, 722) is configured to solve a system of equations of the form

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix},$$

exactly or approximately for determining the parameters $p_0$ and $s$ that describe the position of the line whose position is to be determined; wherein $n_1$ to $n_N$ are vectors normal to the lines (4106, 4107a, 4107b, 4107c, 4108a, 4108b, 4108c) of predetermined or known position in a coordinate system that is fixed with respect to the lines of predetermined or known position, wherein $r_1$ to $r_N$ are scalar values describing a distance of the lines (4106, 4107a, 4107b, 4107c, 4108a, 4108b, 4108c) of predetermined or known position from a coordinate origin of the coordinate system that is fixed with respect to the lines of predetermined or known position, or whose amounts describe a distance of the lines (4106, 4107a, 4107b, 4107c, 4108a, 4108b, 4108c) of predetermined or known position from a coordinate origin of the coordinate system that is fixed with respect to the lines of predetermined or known position, wherein $p_0$ is a position of an origin of a coordinate system allocated to the line (4105) whose position is to be determined in coordinates of the coordinate system that is fixed with respect to the lines of predetermined or known position, wherein $s$ is a direction of a unit section of the coordinate system allocated to the line (4105) whose position is to be determined in coordinates of the coordinate system that is fixed with respect to the lines of predetermined or known position and wherein $k_1$ to $k_N$ describe distances of the intersections (4109a, 4109b, 4109c, 4110a, 411b, 4110c) from an origin $(p_0)$ of the coordinate system allocated to the line whose position is to be determined.

7. Apparatus according to one of claims 1 to 6, wherein the apparatus comprises a carrier member (4103) that is configured to carry a measurement object (4104) and that comprises a plurality of lines (4106, 4107a, 4107b, 4107c, 4108a, 4108b, 4108c) of predetermined or known position for the usage by the positioning unit.

8. Apparatus according to claim 7, wherein the carrier member (4103) comprises at least four lines (4106, 4107a, 4107b, 4107c, 4108a, 4108b, 4108c) of predetermined or known position.

9. Apparatus according to claim 7 or 8, wherein the lines (4106, 4107a, 4107b, 4107c, 4108a, 4108b, 4108c) of predetermined or known position include, in pairs, an angle of at least 2 degrees or wherein a subset of the lines of predetermined or known position includes, in pairs, an angle of at least two degrees.

10. Apparatus according to one of claims 1 to 9, wherein the positioning unit (310; 716, 722) is configured to fulfill the function of a trigger means (130; 230), wherein the positioning unit is configured to obtain image information (312; 710) from a measurement camera and to trigger, in dependence on image content of the image information, forwarding of the image information to an evaluation means for determining measurement results or an evaluation of the image information by an evaluation means for determining measurement results of the object.

11. Apparatus according to claim 10, wherein the positioning unit (310; 716, 722) is configured to detect when the image content has shifted with respect to a reference image content by at least one predetermined shift and to trigger, in dependence on detecting a shift, forwarding of the image information or the evaluation of the image information by the evaluation means for determining measurement results.

12. Apparatus according to one of claims 10 to 11, wherein the positioning unit (310; 716, 722) is configured to determine or estimate, based on the image content, a movement of a camera (4101) generating the image information and/or a shift of a light source (4102) irradiating the measurement object and/or a movement of the measurement object, and wherein the positioning unit is configured to trigger, depending on the determination or estimation of the shift, forwarding of the image information or the evaluation of the image information by the evaluation means for determining measurement results.

13. Apparatus according to one of claims 10 to 12, wherein the positioning unit (310; 716, 722) is configured to use a 3-dimensional reconstruction for motion estimation when analyzing the image content and/or to perform a comparison of gray value features in an advance direction and/or to detect marks and/or to detect color terms.

14. Apparatus according to one of claims 1 to 13, wherein the apparatus comprises a camera (4101; 708) for providing the image information (312;710).

15. Method (800) for three-dimensional measurement of an object, comprising:

    receiving (810), from a camera, image information showing intersections of a line whose position is to be determined with a plurality of at least three lines of predetermined or known position that are arranged at or on a carrier member that is configured to carry the measurement object and that lie in one plane and that are not all parallel to one another, and
    determining (820) a position of the projected line based on the received image information;
    wherein the method includes defining a coordinate origin ($p_0$) of a coordinate system allocated to the line (4105) whose position is to be determined and a unit section (s) of the coordinate system allocated to the line whose position is to be determined, and
    determining a plurality of parameters ($k_i$) that describe intersections (4109a, 4109b, 4109c, 4110a, 4110b, 4110c) between the line (4105) whose position is to be determined and the lines (4106, 4107a, 4107b, 4107c, 4108a, 4108b, 4108c) of the plurality of lines of predetermined or known position;
    wherein the parameters ($k_i$) are defined such that the parameters or amounts of the parameters describe distances of the intersections from the coordinate origin ($p_0$) of the coordinate sys-

tem allocated to the line (4105) whose position is to be determined;
wherein the method includes determining a position of the coordinate origin ($p_0$) of the coordinate system allocated to the line (4105) whose position is to be determined in a coordinate system (4201) allocated to a carrier member (4103) carrying the lines (4106, 4107a, 4107b, 4107c, 4108a, 4108b, 4108c) of predetermined or known position or with respect to which the lines of predetermined or known position are imaged in a stationary manner.

16. Computer program configured to perform the method according to claim 15 when the computer program is run on a computer.

## Revendications

1. Dispositif (300; 400; 500; 700) pour mesurer un objet (4104) en trois dimensions, aux caractéristiques suivantes:

    un déterminateur de position (310; 716, 722) qui est conçu pour recevoir d'une caméra une information d'image (312; 710) qui montre les points d'intersection (4109a, 4109b, 4109c, 4110a, 4110b, 4110c) d'une ligne (4105) dont la position doit être déterminée avec une pluralité d'au moins trois lignes (4106, 4107a, 4107b, 4107c, 4108a, 4108b, 4108c) de position prédéterminée ou connue qui sont disposées à ou sur un élément de support qui est conçu pour porter l'objet de mesure, et qui se trouvent dans un plan et qui ne sont pas toutes parallèles entre elles, et pour déterminer, sur base de l'information d'image reçue, une position de la ligne (4105);
    dans lequel le déterminateur de position (310; 716, 722) est conçu pour définir une origine de coordonnées ($p_0$) d'un système de coordonnées qui est associé à la ligne (4105) dont la position doit être déterminée, et un segment unitaire (s) du système de coordonnées qui est associé à la ligne dont la position doit être déterminée, et pour déterminer une pluralité de paramètres ($k_i$) qui décrivent les points d'intersection (4109a, 4109b, 4109c, 4110a, 4110b, 4110c) entre la ligne (4105) dont la position doit être déterminée et les lignes (4106, 4107a, 4107b, 4107c, 4108a, 4108b, 4108c) de la pluralité de lignes de position prédéterminée ou connue;
    dans lequel le déterminateur de position (310; 716, 722) est conçu pour déterminer les paramètres ($k_i$) de sorte que les paramètres, ou les quantités des paramètres, décrivent les distances des points d'intersection par rapport à l'ori-

gine de coordonnées ($p_0$) du système de coordonnées qui est associé à la ligne (4105) dont la position doit être déterminée;

dans lequel le déterminateur de position (310; 716, 722) est conçu pour déterminer une position de l'origine de coordonnées ($p_0$) du système de coordonnées qui est associé à la ligne (4105) dont la position doit être déterminée, dans un système de coordonnées (4201) qui est associé à un élément de support (4103) qui porte les lignes (4106, 4107a, 4107b, 4107c, 4108a, 4108b, 4108c) de position prédéterminée ou connue ou par rapport auquel les lignes de position prédéterminée ou connue sont reproduites de manière stationnaire.

2. Dispositif selon la revendication 1, dans lequel le déterminateur de position (310; 716, 722) est conçu pour obtenir les constantes $n_i$, n qui décrivent les lignes (4106, 4107a, 4107b, 4107c, 4108a, 4108b, 4108c) de position prédéterminée ou connue dans un système de coordonnées sous la forme

$$n_i^T p = r_i.$$

3. Dispositif selon l'une des revendications 1 à 2, dans lequel le déterminateur de position (310; 716, 722) est conçu pour déterminer une information sur la position des lignes (4106, 4107a, 4107b, 4107c, 4108a, 4108b, 4108c) de position prédéterminée ou connue à l'aide d'une information contenue dans un code optique unidimensionnel ou bidimensionnel (4207).

4. Dispositif selon l'une des revendications 1 à 3, dans lequel le déterminateur de position (310; 716, 722) est conçu pour déterminer les paramètres $k_i$ qui décrivent les points d'intersection $p_i$ d'une ligne (4105) dont la position doit être déterminée avec les lignes de position prédéterminée ou connue dans un système de coordonnées associé à la ligne dont la position doit être déterminée sous la forme $p_i = p_0 + k_i s.$

5. Dispositif selon l'une des revendications 1 à 4, dans lequel le déterminateur de position (310; 716, 722) est conçu pour résoudre un système d'équations qui combine les équations linéaires des lignes (4106, 4107a, 4107b, 4107c, 4108a, 4108b, 4108c) de position prédéterminée ou connue et une représentation des coordonnées des points d'intersection dans un système de coordonnées ($p_0$,s) associé à la ligne (4105) dont la position doit être déterminée pour obtenir une information sur une position d'une origine de coordonnées ($p_0$) de la ligne dont la position doit être déterminée et une information sur une orientation (s) du système de coordonnées associé à la ligne dont la position doit être déterminée.

6. Dispositif selon l'une des revendications 1 à 5, dans lequel le déterminateur de position (310; 716 722) est conçu pour résoudre de manière exacte ou approximative un système d'équations de la forme

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix},$$

pour déterminer les paramètres $p_0$ et s qui décrivent la position de la ligne dont la position doit être déterminée;

où $n_1$ à $n_N$ sont des vecteurs normaux aux lignes (4106, 4107a, 4107b, 4107c, 4108a, 4108b, 4108c) de position prédéterminée ou connue dans un système de coordonnées fixe en ce qui concerne les lignes de position prédéterminée ou connue,

où $r_1$ à $r_N$ sont des valeurs scalaires qui décrivent une distance des lignes (4106, 4107a, 4107b, 4107c, 4108a, 4108b, 4108c) de position prédéterminée ou connue par rapport à une origine de coordonnées du système de coordonnées fixe en ce qui concerne les lignes de position prédéterminée ou connue, ou dont les quantités décrivent une distance des lignes (4106, 4107a, 4107b, 4107c, 4108a, 4108b, 4108c) de position prédéterminée ou connue par rapport à une origine de coordonnées du système de coordonnées fixe en ce qui concerne les lignes de position prédéterminée ou connue,

où $p_0$ est une position d'une origine d'un système de coordonnées associé à la ligne (4105) dont la position doit être déterminée dans les coordonnées du système de coordonnées fixe en ce qui concerne les lignes de position prédéterminée ou connue,

où s est une direction d'un segment unitaire du système de coordonnées associé à la ligne (4105) dont la position doit être déterminée dans les coordonnées du système de coordonnées fixe en ce qui concerne les lignes de position prédéterminée ou connue, et

où $k_1$ à $k_N$ décrivent les distances des points d'intersection (4109a, 4109b, 4109c, 4110a, 411b, 4110c) par rapport à une origine ($p_0$) du système de coordonnées associé à la ligne dont la position doit être déterminée.

7. Dispositif selon l'une des revendications 1 à 6, dans lequel le dispositif présente un élément de support (4103) qui est conçu pour supporter un objet de mesure (4104) et qui présente une pluralité de lignes (4106, 4107a, 4107b, 4107c, 4108a, 4108b, 4108c) de position prédéterminée ou connue à utiliser par le déterminateur de position.

**8.** Dispositif selon la revendication 7, dans lequel l'élément de support (4103) présente au moins quatre lignes (4106, 4107a, 4107b, 4107c, 4108a, 4108b, 4108c) de position prédéterminée ou connue.

**9.** Dispositif selon la revendication 7 ou 8, dans lequel les lignes (4106, 4107a, 4107b, 4107c, 4108a, 4108b, 4108c) de position prédéterminée ou connue forment par paire un angle d'au moins 2 degrés, ou dans lequel une quantité partielle des lignes de position prédéterminée ou connue forment par paire un angle d'au moins deux degrés.

**10.** Dispositif selon l'une des revendications 1 à 9, dans lequel le déterminateur de position (310; 716, 722) est conçu pour réaliser la fonction d'un moyen de déclenchement (130; 230), dans lequel le déterminateur de position est conçu pour recevoir d'une caméra de mesure une information d'image (312; 710) et pour déclencher, en fonction d'un contenu d'image de l'information d'image, une transmission de l'information d'image à un moyen d'évaluation pour déterminer les résultats de mesure ou une évaluation de l'information d'image par un moyen d'évaluation pour déterminer les résultats de mesure de l'objet.

**11.** Dispositif selon la revendication 10, dans lequel le déterminateur de position (310; 716, 722) est conçu pour détecter le moment où le contenu d'image s'est décalé d'au moins un décalage prédéterminé par rapport à un contenu d'image de référence, et pour déclencher, en fonction de la détection d'un décalage, la transmission de l'information d'image ou l'évaluation de l'information d'image par le moyen d'évaluation pour déterminer les résultats de mesure.

**12.** Dispositif selon l'une des revendications 10 à 11, dans lequel le déterminateur de position (310; 716, 722) est conçu pour déterminer ou estimer, sur base du contenu d'image, un déplacement d'une caméra (4101) qui génère l'information d'image et/ou un déplacement d'une source de lumière (4102) qui irradie l'objet de mesure, et/ou un déplacement de l'objet de mesure, et dans lequel le déterminateur de position est conçu pour déclencher, en fonction de la détermination ou de l'estimation du déplacement, la transmission de l'information d'image ou l'évaluation de l'information d'image par le moyen d'évaluation pour déterminer les résultats de mesure.

**13.** Dispositif selon l'une des revendications 10 à 12, dans lequel le déterminateur de position (310; 716, 722) est conçu pour utiliser, lors de l'analyse du contenu d'image, une reconstruction tridimensionnelle pour l'estimation de déplacement, et/ou pour effectuer une comparaison de caractéristiques de valeur de gris dans une direction d'avance, et/ou pour détecter des marques, et/ou pour détecter des expressions de couleur.

**14.** Dispositif selon l'une des revendications 1 à 13, dans lequel le dispositif présente une caméra (4101; 708) destinée à fournir l'information d'image (312; 710).

**15.** Procédé (800) pour mesurer un objet en 3 dimensions, aux étapes suivantes consistant à:

recevoir (810) d'une caméra une information d'image qui montre les points d'intersection d'une ligne dont la position doit être déterminée avec une pluralité d'au moins trois lignes de position prédéterminée ou connue qui sont disposées à ou sur un élément de support qui est conçu pour porter l'objet de mesure ou qui sont reproduites de manière stationnaire par rapport à l'élément de support, et qui se trouvent dans un plan et qui ne sont pas toutes parallèles entre elles, et

déterminer (820), sur base de l'information d'image reçue, une position de la ligne dont la position doit être déterminée;

dans lequel le procédé comporte le fait définir une origine de coordonnées ($p_0$) d'un système de coordonnées qui est associé à la ligne (4105) dont la position doit être déterminée et un segment unitaire (s) du système de coordonnées qui est associé à la ligne dont la position doit être déterminée, et

le fait de déterminer une pluralité de paramètres ($k_i$) qui décrivent les points d'intersection (4109a, 4109b, 4109c, 4110a, 4110b, 4110c) entre la ligne (4105) dont la position doit être déterminée et les lignes (4106, 4107a, 4107b, 4107c, 4108a, 4108b, 4108c) de la pluralité de lignes de position prédéterminée ou connue;

dans lequel les paramètres ($k_i$) sont déterminés de sorte que les paramètres, ou les quantités des paramètres, décrivent les distances des points d'intersection par rapport à l'origine de coordonnées ($p_0$) du système de coordonnées qui est associé à la ligne (4105) dont la position doit être déterminée;

dans lequel le procédé comporte le fait de déterminer une position de l'origine de coordonnées ($p_0$) du système de coordonnées qui est associé à la ligne (4105) dont la position doit être déterminée, dans un système de coordonnées (4201) qui est associé à un élément de support (4103) qui porte les lignes (4106, 4107a, 4107b, 4107c, 4108a, 4108b, 4108c) de position prédéterminée ou connue ou par rapport auquel les lignes de position prédéterminée ou connue sont reproduites de manière stationnaire.

**16.** Programme d'ordinateur conçu pour mettre en œuvre le procédé selon la revendication 15 lorsque le programme d'ordinateur est exécuté sur un ordinateur.

100

Vorrichtung zur dreidimensionalen Vermessung eines Objekts

110　Bildinformation
von einer Messkamera

Auslöseeinrichtung　　～130

120～ Auslösung (z.B. Auslösesignal) einer
Messausgabe oder einer Auswertung
der Bildinformation durch eine Auswerteeinrichtung zur Bestimmung von
Vermessungsergebnissen

Fig. 1

200
208

240

digitale
Schnittstelle
des
Bildsensors

Bildsensor

212

Analog-
Digital-
Wandler/
Schnittstelle

242

210

230

Analoge Vorverarbeitung

* z.B. Erkennung von Linien/
Schnittpunkten/Marken auf
Unterlage oder Messobjekt,
2-D-optischen Eigenschaften entlang Laserlinie,
Differenz zwischen
aufeinanderfolgenden
Bildern, Bewegung,
Spektral(eigenschaften)

* Triggerung einer Ausgabe
einer Bildinformation oder
einer Auswertung der Bildinformation

Triggerung der
Bildausgabe

alternativ oder
in Kombination

212

Triggersignal

Triggerung der
Bildverarbeitung
(z.B: Auswerteeinrichtung
zur Bestimmung von
Vermessungsergebnissen)

(im Bildsensor oder außerhalb
des Bildsensors)

Fig. 2

300

Vorrichtung zur dreidimensionalen Vermessung eines Objekts

312
Bildinformation

Information über
Schnittpunkte einer
projizierten Linie mit
einer Mehrzahl von
Linien vorbestimmter
oder bekannter Lage

310

Information über Lage
der projizierten Linie

314

Fig. 3

400

EP 3 433 573 B1

Blick schräg
Messkamera
4101

Laserliniengenerator
4102

4108c

4108

4108a

4108d

4108b

Unterlage (Träger)
4103

4107c

4107b

Messobjekt
4104

4107a

4107d

4107

Markierungen
zur Lokalisation
4106

Laserlinie
4105

Fig. 4

Fig. 5

EP 3 433 573 B1

$p_1$, $p_2$, $p_3$, $p_4$       : Koordinaten der Schnittpunkte im
(allgemein: $p_i$)        Koordinatensystem der Bildinformation bekannt

⇩

s                 : Richtung der (Regressions-) Gerade durch die
                   Schnittpunkte im Koordinatensystem der
                   Bildinformation bestimmt

⇩

$p_0$               : Koordinatenursprung der (Regressions-) Gerade
                   durch die Schnittpunkte im Koordinatensystem
                   der Bildinformation gewählt

⇩

$k_i$               : Parameter der Schnittpunkte basierend auf
                   $p_i = p_0 + k_i s$ oder
                   $p_i \approx p_0 + k_i s$ bestimmt

⇩

Bestimmung der Lage von $P_0$ und der Richtung von s
im Koordinatensystem der Linien vorbestimmter
oder bekannter Lage

## Fig. 6

700

708 — Bildsensor

digitale
Schnittstelle
des Bildsensors

Bildausgabe

740

742

zur
weiteren
Verarbeitung
(z.B.
Bestimmung
Höhenprofil)

710

716 — Analoge Vorverarbeitung

→ Erkennung von Schnittpunkten
einer projizierten Linie mit Linien
vorbestimmter oder kekannter Lage
(beispielsweise auf einem Objekt
oder Trägerbauteil)

718 — Information über Lage
der Schnittpunkte

722 — (schneller) Positionsbestimmer

optional

724 — Positionsinformation

zur weiteren
Verarbeitung
(z.B.
Bestimmung
Höhenprofil)

726 — Triggerung (Auflösung)
(beispielsweise falls Position
oder Veränderung der Position
vorgegebene Bedingung erfüllt

Triggersignal

720

Fig. 7

800

Empfangen einer Bildinformation, die Schnittpunkte einer projizierten Linie mit einer Mehrzahl von Linien vorbestimmter oder bekannter Lage zeigt ⏝ 810

Bestimmen einer Lage der projizierten Linie basierend auf der empfangenen Bildinformation ⏝ 820

Fig. 8

900

Erhalten einer Bildinformation von einer Messkamera ⏝ 910

Auslösen, abhängig von einem Bildinhalt der Bildinformation, einer Messausgabe oder einer Auswertung der Bildinformation durch eine Auswerteeinrichtung zur Bestimmung von Vermessungsergebnissen ⏝ 920

Fig. 9

**IN DER BESCHREIBUNG AUFGEFÜHRTE DOKUMENTE**

**In der Beschreibung aufgeführte Patentdokumente**

- US 20050068523 A1
- US 20090040532 A1
- US 20140029018 A1
- US 20080204763 A1
- US 20140285658 A1
- EP 0228500 A2